# EUROPEAN PATENT SPECIFICATION

(11) **EP 3 944 079 B1**
(45) Date of publication and mention of the grant of the patent: **27.08.2025**
(21) Application number: 20799389.0
(22) Date of filing: 21.04.2020
(51) Int. Cl.: G06F 9/451, G06F 3/0488, G06F 3/0483

(54) **METHOD OF SWITCHING BETWEEN PARENT PAGE AND SUBPAGE, AND RELATED DEVICE**
VERFAHREN ZUM UMSCHALTEN ZWISCHEN EINER ÜBERGEORDNETEN SEITE UND EINER UNTERSEITE UND ZUGEHÖRIGE VORRICHTUNG
PROCÉDÉ DE COMMUTATION ENTRE UNE PAGE PARENT ET UNE SOUS-PAGE, ET DISPOSITIF ASSOCIÉ

(30) Priority: 30.04.2019 CN 201910365499
(43) Date of publication of application: 26.01.2022
(73) Proprietor: Huawei Technologies Co., Ltd., Shenzhen, Guangdong 518129 (CN)
(72) Inventor: DONG, Feng, Shenzhen, Guangdong 518129 (CN); JIN, Xin, Shenzhen, Guangdong 518129 (CN)
(74) Representative: Maiwald GmbH
(86) International application number: PCT/CN2020/085903
(87) International publication number: WO 2020/221063

(56) References cited:
- EP-A1- 2 584 445
- CN-A- 104 133 725
- CN-A- 106 156 066
- CN-A- 108 459 888
- CN-A- 110 119 296
- US-A1- 2008 109 753
- US-A1- 2009 007 017
- US-A1- 2009 172 532
- KIMBALL GEOFF: "How to create custom animations with Motion UI | Creative Bloq", 15 February 2016 (2016-02-15), pages 1 - 11, XP055909050, Retrieved from the Internet <URL:https://www.creativebloq.com/web-design/create-custom-animations-motion-ui-21619210> [retrieved on 20220405]
- ANONYMOUS: "Mask (computing) - Wikipedia", 14 February 2019 (2019-02-14), pages 1 - 6, XP055908972, Retrieved from the Internet <URL:https://en.wikipedia.org/w/index.php?title=Mask_(computing)&oldid=883299359#Uses_of_bitmasks> [retrieved on 20220405]
- ANONYMOUS: "Mask (computing) - Wikipedia", 14 February 2019 (2019-02-14), pages 1 - 5, XP093023372, Retrieved from the Internet <URL:https://en.wikipedia.org/w/index.php?title=Mask_(computing)&oldid=883299359> [retrieved on 20230214]
- ANONYMOUS: "Cover And Uncover Transition Effects In PowerPoint 2013", 9 October 2013 (2013-10-09), pages 1 - 2, XP093066715, Retrieved from the Internet <URL:https://web.archive.org/web/20131009054936/https://www.free-power-point-templates.com/articles/cover-and-uncover-transition-effects-in-powerpoint-2013/> [retrieved on 20230724]

## Description

### TECHNICAL FIELD

This application relates to the terminal field and the field of computer graphics processing technologies, and in particular, to a method for switching between a parent page and a child page and a related apparatus.

### BACKGROUND

In a process of using an electronic device such as a mobile phone or a tablet computer, when operating an application (application, APP) installed on the electronic device, a user often switches from a parent page to a child page or switches from a child page to a parent page. For example, when operating an application "Contacts (Contacts)" installed on the electronic device, the user may switch from a home page provided by the application "Contacts (Contacts)" to a page used to display address book details of a specific contact.

US2009/007017A1 describes that a computer-implemented method is performed at a portable multifunction device with a touch screen display. It is described that the computer-implemented method includes: displaying a home menu comprising a plurality of application launch icons; detecting activation of any respective application launch icon; and, in response to detecting the activation, displaying a first animation of a transition from display of the home menu to display of an application that corresponds to the activated application launch icon. The first animation comprises expanding an image of the application.

US2009/172532A1 describes methods and systems that improve the way media is played, sorted, modified, stored and cataloged on a portable electronic device (e.g., media player). It is described that one aspect relates to an image based browser that allows a user to navigate through and select images that are related to media items. It is described that in one embodiment, during navigation, transitions between images being displayed can be animated.

EP2584445A1 describes a method of animating a rearrangement of user interface elements on a display screen of an electronic device. It is described that the method comprises: displaying a plurality of user interface elements on the display screen, each user interface element having an initial screen position corresponding to a first layout; in response to a command from an application to switch to a second layout, for each user interface element, determining at a rendering engine, without further input from the application, a final screen position corresponding to the second layout and a plurality of intermediate screen positions corresponding to a path between the initial screen position and the final screen position; and re-rendering each user interface element successively at each of its determined positions.

Currently, an electronic device running an Android (Android) operating system usually switches between a parent page and a child page in two switching manners. An example of switching from a parent page to a child page is used for description below.

An existing manner 1 is a manner in which a child page moves from the bottom to the top of a screen for display. In this switching manner, a visual movement path of a user is from the bottom to the top of the screen. Consequently, the visual movement path is relatively long, and experience is poor.

An existing manner 2 is a manner in which a child page moves from a right side to a left side of a screen and is displayed with changing transparency. Switching between a parent page and a child page is a common operation and usually takes a short time. Therefore, in this switching manner, a user may see a ghost image of the parent page. Consequently, a switching effect is abrupt, and experience is poor.

Based on a current case in which a user frequently switches between a parent page and a child page, it is necessary to propose a corresponding technical solution, so that switching between a parent page and a child page better meets a user expectation, provides a better visual effect for the user, and improves user experience.

### SUMMARY

This application provides a method for switching between a parent page and a child page and a related apparatus. During switching from a parent page to a child page, a user's visual movement line is shortened, a better visual effect is provided, and user experience is improved.

The invention and its scope of protection is defined by the appended independent claims whereby specific embodiments are defined in the dependent claims. Claim 1 defines a method for switching between a parent page and a child page. Claim 12 defines an electronic device. The following aspects and embodiments of the disclosure provide examples of combinations of technical subject matters.

According to a first aspect, this application provides a method for switching between a parent page and a child page, and the method is applied to an electronic device. The method may include: The electronic device displays, on a display in full screen, a parent page provided by an application, where the application further provides a child page, the parent page is an upper-level page of the child page, and sizes of the parent page and the child page are the same; and the electronic device detects an operation used to switch from the parent page to the child page, and in response to the operation used to switch from the parent page to the child page, the electronic device automatically perform the following steps:
switching from displaying the parent page in full screen to superimposing and displaying a middle part of the child page on a first side of the display, where a height of the middle part of the child page is the same as a height of the child page, and a width of the middle part of the child page is less than a width of the child page; and
controlling the child page to gradually move toward a second side of the display and gradually expanding the displayed part of the child page on the display, until the child page is displayed on the display in full screen, where the second side is opposite to the first side.

According to the method in the first aspect, a user may see that the child page moves toward the second side, the displayed part of the child page on the display gradually expands, and a displayed part of the parent page on the display gradually narrows, until the child page is displayed on the display in full screen. This manner provided by the electronic device to switch from a parent page to a child page meets a user expectation, provides a natural visual effect, achieves a relatively short user's visual movement line, and provides optimal use experience for the user.

With reference to the first aspect, in some embodiments, the parent page may include one or more entries. The one or more entries may receive an operation (for example, a touch operation) of opening a corresponding interface. The operation of switching from the parent page to the child page may include an operation (for example, a touch operation) performed on the entry. In addition to the operation performed on the entry, the operation used to switch from the parent page to the child page may further include a voice instruction entered by the user and the like. This is not limited in this application.

With reference to the first aspect, an area size of the middle part of the child page is not limited in this application. In some embodiments, the middle part of the child page does not include two edges of the child page.

With reference to the first aspect, in some embodiments, the first side of the display is a right side of the display, and the second side of the display is a left side of the display. In other words, in the method for switching from a parent page to a child page provided in the first aspect, the child page moves toward the left side of the display and displayed content of the child page on the display gradually increases, until the child page is displayed on the display in full screen.

With reference to the first aspect, in some embodiments, the electronic device may gradually expand the displayed part of the child page on the display toward the first side and the second side. Specifically, the electronic device expands the displayed part of the child page on the display by using the following several policies:
1. The electronic device first expands the displayed part of the child page on the display toward the first side, and then expands the displayed part of the child page on the display toward the second side, until the child page is displayed on the display in full screen.
2. The electronic device first expands the displayed part of the child page on the display toward the second side, and then expands the displayed part of the child page on the display toward the first side, until the child page is displayed on the display in full screen.
3. The electronic device simultaneously expands the displayed part of the child page on the display toward the first side and the second side, until the child page is displayed on the display in full screen.

The electronic device expands the displayed part of the child page on the display by using any one of the foregoing policies, so that interest of switching between the parent page and the child page can be improved during switching from the parent page to the child page.

With reference to the first aspect, in some embodiments, in a process of switching from the parent page to the child page, the electronic device may further prompt the user that the electronic device is currently switching from the parent page to the child page. The prompt manner may include:
1. After the electronic device detects the operation used to switch from the parent page to the child page, and before the child page is displayed on the display in full screen, the parent page and the child page are displayed on the display in different forms. The display form includes one or more of a background color, transparency, or a border.
2. In a process in which the electronic device controls the child page to gradually move toward the second side of the display, a background color of the parent page displayed on the display gradually becomes darker, or transparency of the parent page displayed on the display gradually becomes higher.
3. In a process in which the electronic device controls the child page to gradually move toward the second side of the display, transparency of the child page displayed on the display becomes lower.

With reference to the first aspect, in some embodiments, in the process in which the electronic device switches from the parent page to the child page, the child page displayed on the display is implemented by using a mask. The mask includes a mask layer and a masked layer. Only an area in which the mask layer and the masked layer overlap can be displayed on the display. In other words, the user can see only the area in which the mask layer and the masked layer overlap and cannot see other areas. The mask does not affect display of another layer on the display. Specifically, in response to the operation used to switch from the parent page to the child page, the electronic device may further automatically perform the following steps: generating the mask, where the mask includes a mask layer and the child page; and controlling the mask layer and the child page to move toward the second side of the display, where a part in which the child page and the mask layer overlap and that is located in the display is a displayed part of the child page on the display. In some embodiments, a process in which the mask layer and the child page move toward the second side of the display is a deceleration movement process. The deceleration movement process can make the process of switching from the parent page to the child page more meet the user expectation.

With reference to the first aspect, in some embodiments, after the child page is displayed on the display in full screen, the electronic device may further switch back from the child page to the parent page. Specifically, in this application, there may be two manners of switching back from the child page to the parent page:
1. Manner 1: After the child page is displayed on the display in full screen, the electronic device detects an operation used to switch from the child page to the parent page, and in response to the operation used to switch from the child page to the parent page, the electronic device automatically performs the following steps: switching from displaying the child page in full screen to displaying the parent page on the display, and superimposing and displaying a part of the child page on the first side of the display, where a height of the part of the child page is the same as the height of the child page, and a width of the part of the child page is less than the width of the child page; and controlling the child page to gradually move toward the first side of the display and gradually narrowing the displayed part of the child page on the display, until the parent page is displayed on the display in full screen.

An area size of the part of the child page is not limited in this application. In some embodiments, the part of the child page may be the middle part of the child page. In a specific implementation, the part of the child page may be the middle part of the child page mentioned in the first aspect. For details, refer to related descriptions. In some other embodiments, the part of the child page may alternatively be a left part or a right part of the child page.

In Manner 1, the child page may include a back button, and the operation used to switch from the child page to the parent page may include an operation (for example, a touch operation) performed on the back button. In addition to the operation performed on the back button, the operation used to switch from the child page to the parent page may further include a voice instruction entered by the user and the like. This is not limited in this application.

In some embodiments, the electronic device may gradually narrow the displayed part of the child page on the display toward the first side and/or the second side. Specifically, the electronic device narrows the displayed part of the child page on the display by using the following several policies:
(1) The electronic device gradually narrows the displayed part of the child page on the display toward the first side, or the electronic device gradually narrows the displayed part of the child page on the display toward the second side, until the child page is not displayed on the display and the parent page is displayed on the display in full screen.
(2) The electronic device first narrows the displayed part of the child page on the display toward the first side, and then narrows the displayed part of the child page on the display toward the second side, until the child page is not displayed on the display and the parent page is displayed on the display in full screen.
(3) The electronic device first narrows the displayed part of the child page on the display toward the second side, and then narrows the displayed part of the child page on the display toward the first side, until the child page is not displayed on the display and the parent page is displayed on the display in full screen.
(4) The electronic device simultaneously narrows the displayed part of the child page on the display toward the first side and the second side, until the child page is not displayed on the display and the parent page is displayed on the display in full screen.

The electronic device narrows the displayed part of the child page on the display by using any one of the foregoing policies, so that interest of switching between the parent page and the child page can be improved during switching from the child page to the parent page.

2. Manner 2: After the child page is displayed on the display in full screen, the electronic device detects an operation used to switch from the child page to the parent page, and in response to the operation used to switch from the child page to the parent page, the electronic device automatically performs the following steps: switching from displaying the child page in full screen to displaying the parent page on the display, and superimposing and displaying a left part of the child page on the first side of the display, where a height of the left part of the child page is the same as the height of the child page, and a width of the left part of the child page is less than the width of the child page; and controlling the child page to gradually move toward the first side of the display and gradually narrowing the displayed part of the child page on the display, until the parent page is displayed on the display in full screen.

An area size of the left part of the child page is not limited in this application. In some embodiments, the left part of the child page includes a left edge of the child page.

In Manner 2, the user operation used to switch from the child page to the parent page may include the following gestures: 1. Pan gesture performed on the display toward the first side: Duration of the pan gesture is greater than preset duration. In some embodiments, in a process in which the electronic device controls the child page to gradually move toward the first side of the display, a movement speed of the child page is determined by a movement speed of the pan gesture. 2. Swipe gesture performed on the display toward the first side: Duration of the swipe gesture is less than preset duration.

In some embodiments, in a process of switching from the child page to the parent page, the electronic device may further prompt the user that the electronic device is currently switching from the child page to the parent page. The prompt manner may include:
1. In the process in which the electronic device controls the child page to gradually move toward the first side of the display, the child page and the parent page are displayed in different display forms. The page display form may include a page background color, page transparency, a page border, or the like.
2. In the process in which the electronic device controls the child page to gradually move toward the first side of the display, the background color of the parent page displayed on the display gradually becomes lighter, or the transparency of the parent page gradually becomes lower.
3. In the process in which the electronic device controls the child page to gradually move toward the first side of the display, the transparency of the child page displayed on the display becomes higher.

In some embodiments, in the process in which the electronic device switches from the child page to the parent page, the child page displayed on the display is implemented by using the mask. Specifically, in response to the operation used to switch from the child page to the parent page, the electronic device may further automatically perform the following steps: controlling the mask layer and the child page to move toward the first side of the display, where the mask layer and the child page constitute the mask, and the mask is generated by the electronic device in response to the operation used to switch from the parent page to the child page. The part in which the child page and the mask layer overlap and that is located in the display is a displayed part of the child page on the display. In some embodiments, a process in which the mask layer and the child page move toward the first side of the display is a deceleration movement process. The deceleration movement process can make the process of switching from the child page to the parent page more meet the user expectation.

With reference to the first aspect, in some embodiments, both the parent page and the child page are provided by an application Contacts (Contacts). The parent page is a user interface provided by the application Contacts to display one or more pieces of contact information stored in the electronic device, and the child page is a user interface provided by the application Contacts to display address book details of a first contact.

According to a second aspect, this application provides an electronic device. The electronic device may include one or more processors, a memory, and a display.

The memory and the display are coupled to the one or more processors, the memory is configured to store computer program code, the computer program code includes computer instructions, and the one or more processors invoke the computer instructions to enable the electronic device to perform the following operations:
displaying, on the display in full screen, a parent page provided by an application, where the application further provides a child page, the parent page is an upper-level page of the child page, and sizes of the parent page and the child page are the same; and
detecting an operation used to switch from the parent page to the child page, and in response to the operation used to switch from the parent page to the child page, automatically performing the following steps:
   switching from displaying the parent page in full screen to superimposing and displaying a middle part of the child page on a first side of the display, where a height of the middle part of the child page is the same as a height of the child page, and a width of the middle part of the child page is less than a width of the child page; and
   controlling the child page to gradually move toward a second side of the display and gradually expanding the displayed part of the child page on the display, until the child page is displayed on the display in full screen, where the second side is opposite to the first side.

According to the second aspect, when the electronic device switches from the parent page to the child page, a user may see that the child page moves toward the second side, the displayed part of the child page on the display gradually expands, and a displayed part of the parent page on the display gradually narrows, until the child page is displayed on the display in full screen. Such a switching manner meets a user expectation, provides a natural visual effect, achieves a relatively short user's visual movement line, and provides optimal use experience for the user.

With reference to the second aspect, in some embodiments, the parent page may include one or more entries. The one or more entries may receive an operation (for example, a touch operation) of opening a corresponding interface. The operation of switching from the parent page to the child page may include an operation (for example, a touch operation) performed on the entry. In addition to the operation performed on the entry, the operation used to switch from the parent page to the child page may further include a voice instruction entered by the user and the like. This is not limited in this application.

With reference to the second aspect, an area size of the middle part of the child page is not limited in this application. In some embodiments, the middle part of the child page does not include two edges of the child page.

With reference to the second aspect, in some embodiments, the first side of the display is a right side of the display, and the second side of the display is a left side of the display.

With reference to the second aspect, in some embodiments, the electronic device may gradually expand the displayed part of the child page on the display toward the first side and the second side. Specifically, the electronic device expands the displayed part of the child page on the display by using the following several policies:
1. The electronic device first expands the displayed part of the child page on the display toward the first side, and then expands the displayed part of the child page on the display toward the second side, until the child page is displayed on the display in full screen.
2. The electronic device first expands the displayed part of the child page on the display toward the second side, and then expands the displayed part of the child page on the display toward the first side, until the child page is displayed on the display in full screen.
3. The electronic device simultaneously expands the displayed part of the child page on the display toward the first side and the second side, until the child page is displayed on the display in full screen.

The electronic device expands the displayed part of the child page on the display by using any one of the foregoing policies, so that interest of switching between the parent page and the child page can be improved during switching from the parent page to the child page.

With reference to the second aspect, in some embodiments, the one or more processors are further configured to invoke the computer instructions to enable the electronic device to prompt the user that the electronic device is currently switching from the parent page to the child page. The prompt manner may include:
1. After the electronic device detects the operation used to switch from the parent page to the child page, and before the child page is displayed on the display in full screen, the parent page and the child page are displayed on the display in different forms. The display form includes one or more of a background color, transparency, or a border.
2. In a process in which the electronic device controls the child page to gradually move toward the second side of the display, a background color of the parent page displayed on the display gradually becomes darker, or transparency of the parent page displayed on the display gradually becomes higher.
3. In a process in which the electronic device controls the child page to gradually move toward the second side of the display, transparency of the child page displayed on the display becomes lower.

With reference to the second aspect, in some embodiments, the electronic device implements, by using a mask, the child page displayed on the display in a process of switching from the parent page to the child page. Specifically, the one or more processors are further configured to invoke the computer instructions to enable the electronic device to perform the following operations: in response to the operation used to switch from the parent page to the child page, automatically performing the following steps: generating the mask, where the mask includes a mask layer and the child page; and controlling the mask layer and the child page to move toward the second side of the display, where a part in which the child page and the mask layer overlap and that is located in the display is a displayed part of the child page on the display. In some embodiments, a process in which the mask layer and the child page move toward the second side of the display is a deceleration movement process. The deceleration movement process can make the process of switching from the parent page to the child page more meet the user expectation.

With reference to the second aspect, in some embodiments, after the child page is displayed on the display in full screen, the one or more processors are further configured to invoke the computer instructions to enable the electronic device to switch back from the child page to the parent page. Specifically, there may be two types of processes in which the electronic device switches back from the child page to the parent page in this application:
1. First type of process of switching back from the child page to the parent page: After the child page is displayed on the display in full screen, the electronic device detects an operation used to switch from the child page to the parent page, and in response to the operation used to switch from the child page to the parent page, the electronic device automatically performs the following steps: switching from displaying the child page in full screen to displaying the parent page on the display, and superimposing and displaying a part of the child page on the first side of the display, where a height of the part of the child page is the same as the height of the child page, and a width of the part of the child page is less than the width of the child page; and controlling the child page to gradually move toward the first side of the display and gradually narrowing the displayed part of the child page on the display, until the parent page is displayed on the display in full screen.

An area size of the part of the child page is not limited in this application. In some embodiments, the part of the child page may be a middle part of the child page. In a specific implementation, the part of the child page may be the middle part of the child page mentioned in the first aspect. For details, refer to related descriptions. In some other embodiments, the part of the child page may alternatively be a left part or a right part of the child page.

In the first type of process of switching back from the child page to the parent page, the child page may include a back button, and the operation used to switch from the child page to the parent page may include an operation (for example, a touch operation) performed on the back button. In addition to the operation performed on the back button, the operation used to switch from the child page to the parent page may further include a voice instruction entered by the user and the like. This is not limited in this application.

In some embodiments, the electronic device may gradually narrow the displayed part of the child page on the display toward the first side and/or the second side. Specifically, the electronic device narrows the displayed part of the child page on the display by using the following several policies:
(1) The electronic device gradually narrows the displayed part of the child page on the display toward the first side, or the electronic device gradually narrows the displayed part of the child page on the display toward the second side, until the child page is not displayed on the display and the parent page is displayed on the display in full screen.
(2) The electronic device first narrows the displayed part of the child page on the display toward the first side, and then narrows the displayed part of the child page on the display toward the second side, until the child page is not displayed on the display and the parent page is displayed on the display in full screen.
(3) The electronic device first narrows the displayed part of the child page on the display toward the second side, and then narrows the displayed part of the child page on the display toward the first side, until the child page is not displayed on the display and the parent page is displayed on the display in full screen.
(4) The electronic device simultaneously narrows the displayed part of the child page on the display toward the first side and the second side, until the child page is not displayed on the display and the parent page is displayed on the display in full screen.

The electronic device narrows the displayed part of the child page on the display by using any one of the foregoing policies, so that interest of switching between the parent page and the child page can be improved during switching from the child page to the parent page.

2. Second type of process of switching back from the child page to the parent page: After the child page is displayed on the display in full screen, the electronic device detects an operation used to switch from the child page to the parent page, and in response to the operation used to switch from the child page to the parent page, the electronic device automatically performs the following steps: switching from displaying the child page in full screen to displaying the parent page on the display, and superimposing and displaying a left part of the child page on the first side of the display, where a height of the left part of the child page is the same as the height of the child page, and a width of the left part of the child page is less than the width of the child page; and controlling the child page to gradually move toward the first side of the display and gradually narrowing the displayed part of the child page on the display, until the parent page is displayed on the display in full screen.

An area size of the left part of the child page is not limited in this application. In some embodiments, the left part of the child page includes a left edge of the child page.

In the second type of process of switching back from the child page to the parent page, the user operation used to switch from the child page to the parent page may include the following gestures: 1. Pan gesture performed on the display toward the first side: Duration of the pan gesture is greater than preset duration. In some embodiments, in a process in which the electronic device controls the child page to gradually move toward the first side of the display, a movement speed of the child page is determined by a movement speed of the pan gesture. 2. Swipe gesture performed on the display toward the first side: Duration of the swipe gesture is less than preset duration.

In some embodiments, the one or more processors are further configured to invoke the computer instructions to enable the electronic device to prompt the user that the electronic device is currently switching from the child page to the parent page. The prompt manner may include:
1. In the process in which the electronic device controls the child page to gradually move toward the first side of the display, the child page and the parent page are displayed in different display forms. The page display form may include a page background color, page transparency, a page border, or the like.
2. In the process in which the electronic device controls the child page to gradually move toward the first side of the display, the background color of the parent page displayed on the display gradually becomes lighter, or the transparency of the parent page gradually becomes lower.
3. In the process in which the electronic device controls the child page to gradually move toward the first side of the display, the transparency of the child page displayed on the display becomes higher.

In some embodiments, the electronic device implements, by using the mask, the child page displayed on the display in the process of switching from the child page to the parent page. Specifically, the one or more processors are further configured to invoke the computer instructions to enable the electronic device to perform the following operations: in response to the operation used to switch from the child page to the parent page, automatically performing the following steps: controlling the mask layer and the child page to move toward the first side of the display, where the mask layer and the child page constitute the mask, and the mask is generated by the electronic device in response to the operation used to switch from the parent page to the child page. The part in which the child page and the mask layer overlap and that is located in the display is a displayed part of the child page on the display. In some embodiments, a process in which the mask layer and the child page move toward the first side of the display is a deceleration movement process. The deceleration movement process can make the process of switching from the child page to the parent page more meet the user expectation.

With reference to the second aspect, in some embodiments, both the parent page and the child page are provided by an application Contacts (Contacts) application. The parent page is a user interface provided by the application Contacts to display one or more pieces of contact information stored in the electronic device, and the child page is a user interface provided by the application Contacts to display address book details of a first contact.

According to a third aspect, this application provides a computer storage medium. The computer storage medium includes computer instructions, and when the computer instructions are run on an electronic device, the electronic device is enabled to perform the method according to the first aspect.

According to a fourth aspect, this application provides a computer program product. When the computer program product is run on a computer, the computer is enabled to perform the method according to the first aspect.

According to a fifth aspect, this application provides an electronic device. The electronic device includes a function unit configured to perform the method according to the first aspect.

In this application, when displaying the parent page on the display in full screen, the electronic device detects the operation used to switch from the parent page to the child page. In response to the operation, the electronic device may switch from displaying the parent page in full screen to superimposing and displaying the middle part of the child page on the first side of the display; and control the child page to gradually move toward the second side of the display and expand the displayed part of the child page on the display, until the child page is displayed on the display in full screen. Such a process of switching from a parent page to a child page can shorten a user's visual movement line, provide a better visual effect, and improve user experience.

### BRIEF DESCRIPTION OF DRAWINGS

FIG. 1A is a schematic diagram of an example of a parent page according to this application;
FIG. 1B is a schematic diagram of an example of a child page according to this application;
FIG. 2 is a schematic diagram of a mask according to this application;
FIG. 3A is a schematic diagram of a structure of an electronic device according to this application;
FIG. 3B is a block diagram of a software structure of an electronic device according to this application;
FIG. 4 is a schematic diagram of a home screen on an electronic device according to this application;
FIG. 5A to FIG. 5D are a schematic diagram of human-computer interaction involved in a process of switching from a parent page to a child page according to this application;
FIG. 6A to FIG. 6D are a schematic diagram of layer movement involved in a process of switching from a parent page to a child page according to this application;
FIG. 7 is a schematic diagram of a Bezier curve according to this application;
FIG. 8A to FIG. 8D are a schematic diagram of human-computer interaction involved in a process of switching from a child page to a parent page according to this application;
FIG. 9A to FIG. 9D are a schematic diagram of human-computer interaction involved in another process of switching from a child page to a parent page according to this application;
FIG. 10A to FIG. 10D are a schematic diagram of human-computer interaction involved in still another process of switching from a child page to a parent page according to this application;
FIG. 11 is a schematic diagram of a gesture according to this application;
FIG. 12A to FIG. 12D are a schematic diagram of layer movement involved in a process of switching from a child page to a parent page according to this application;
FIG. 13 is a schematic diagram of another Bezier curve according to this application; and
FIG. 14 is a schematic flowchart of interaction between each software module and each hardware module when an electronic device switches between a parent page and a child page according to this application.

### DESCRIPTION OF EMBODIMENTS

The following describes the technical solutions in the embodiments of this application with reference to the accompanying drawings in the embodiments of this application.

In the descriptions of the embodiments of this application, unless otherwise specified, "/" means "or". For example, A/B may represent A or B. In this specification, "and/or" describes only an association between associated objects and represents that three relationships may exist. For example, A and/or B may represent the following three cases: Only A exists, both A and B exist, and only B exists. In addition, in the descriptions of the embodiments of this application, "a plurality of" means two or more than two.

The following terms "first" and "second" are merely intended for a purpose of descriptions, and shall not be understood as an indication or implication of relative importance or implicit indication of a quantity of indicated technical features. Therefore, a feature limited by "first" or "second" may explicitly or implicitly include one or more features. In the descriptions of the embodiments of this application, unless otherwise specified, "a plurality of" means two or more.

A term "page" in this specification, the claims, and the accompanying drawings of this application may also be referred to as "user interface (user interface, UI)", is a medium interface for interaction and information exchange between an application or an operating system and a user, and implements conversion between an internal form of information and a form that can be accepted by the user. A user interface of an application is source code compiled in a specific computer language such as Java or an extensible markup language (extensible markup language, XML). The interface source code is parsed and rendered on a terminal device, and is finally presented as content that can be identified by the user, for example, a control such as an image, a text, or a button. The control (control) is also referred to as a widget (widget), and is a basic element of the user interface. Typical controls include a toolbar (toolbar), a menu bar (menu bar), a text box (text box), a button (button), a scrollbar (scrollbar), an image, and a text. An attribute and content of a control on an interface are defined by using a tag or a node. For example, the XML defines, by using a node such as <Textview>, <ImgView>, or <VideoView>, the control included in the interface. One node corresponds to one control or attribute on the interface. After being parsed and rendered, the node is presented as content visible to the user. In addition, interfaces of a plurality of applications such as a hybrid application (hybrid application) usually further include a web page. The web page may be understood as a special control embedded in an application interface. The web page is source code written in a specific computer language, for example, a hypertext markup language (hypertext markup language, HTML), a cascading style sheet (cascading style sheet, CSS), or JavaScript (JavaScript, JS). A browser or a web page display component whose function is similar to that of a browser may load and display the web page source code as content that can be identified by the user. Specific content included in the web page is also defined by using a tag or a node in the web page source code. For example, the HTML defines an element and an attribute of the web page by using <p>, <img>, <video>, or <canvas>.

The user interface is usually represented in a form of a graphical user interface (graphical user interface, GUI), which is a user interface that is related to a computer operation and that is displayed in a graphical manner. The user interface may be an interface element such as an icon, a window, or a control displayed on a display of an electronic device. The control may include a visible interface element such as an icon, a button, a menu, a tab, a text box, a dialog box, a status bar, a navigation bar, or a widget.

The following embodiments of this application provide a method for switching between a parent page and a child page and a related apparatus. The method for switching between a parent page and a child page may include a method for switching from a parent page to a child page and a method for switching from a child page to a parent page. An example of switching from a parent page to a child page is used. When an electronic device detects an operation that is entered by a user and that is used to switch from a parent page to a child page, the electronic device displays the child page on a display, and the child page translates from a right edge to a left edge of the display, until the child page is displayed on the display in full screen. Such a switching manner can shorten a user's visual movement line, provide a better visual effect, and improve user experience.

In the following embodiments of this application, the parent page and the child page are relative concepts involved when an application in the electronic device runs. The parent page and the child page are usually provided by a same application. Sizes of the parent page and the child page are the same. To be specific, a height of the parent page is the same as a height of the child page, and a width of the parent page is the same as a width of the child page. A person skilled in the art may understand that a logical parent page of a page is fixed, and is determined during application design. When a page is used as a parent page, the page may correspond to a plurality of child pages. When a page is used as a child page, the page corresponds to only one parent page. In some possible implementations, if a page provided by an application may be switched to another page by using a back button (an app-level back button provided by the application or a back button provided by a system navigation bar), the page and the another page may constitute a parent-child page. The page is a child page, and the another page is a parent page.

In the following embodiments of this application, both a parent page and a child page are provided by an application installed in the electronic device, and do not include a system-level interface element provided by an operating system of the electronic device. The system-level interface element may include but is not limited to a status bar, a navigation bar, a floating navigation ball, and the like.

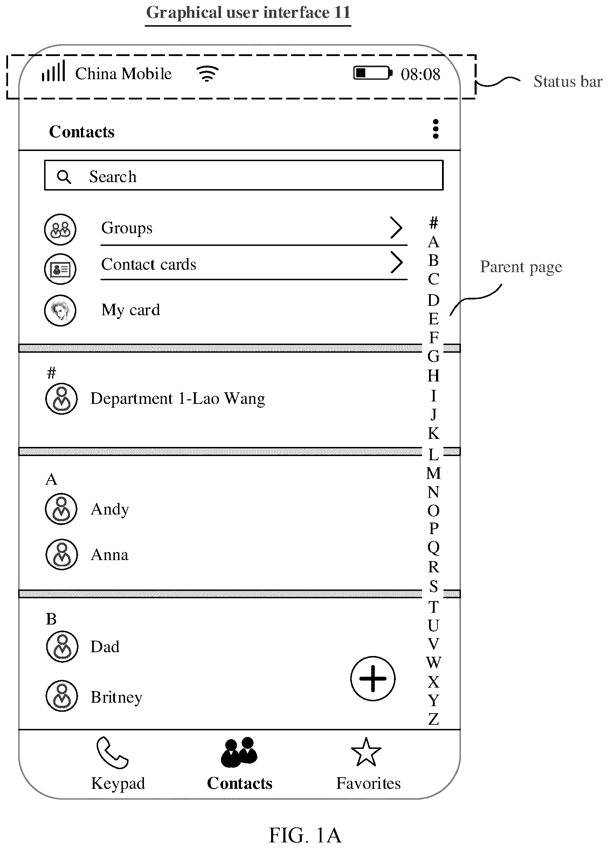

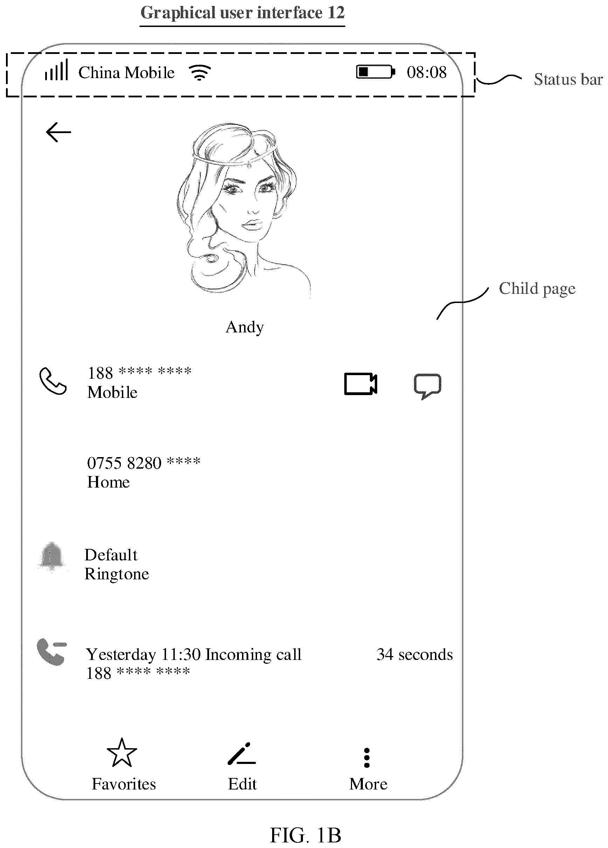

For example, on a user interface provided by an application "Contacts (Contacts)", a home page used to display one or more pieces of stored contact information may be a parent page, and a page used to display address book details of any specific contact may be a child page. FIG. 1A shows a user interface 11 provided by the electronic device. The user interface 11 includes a status bar and a user interface (that is, a parent page) used to display one or more pieces of contact information stored in the electronic device. FIG. 1B shows a user interface 12 provided by the electronic device. The user interface 12 includes a status bar and a user interface (that is, a child page) used to display address book details of any specific contact. Both the home page (that is, the parent page) used to display one or more pieces of contact information stored in the electronic device and the page (that is, the child page) used to display address book details of any specific contact are provided by the application "Contacts (Contacts)", and the status bar is provided by the operating system of the electronic device.

For another example, on a user interface provided by a "WeChat (WeChat)" application, a page used to display recent contacts may be a parent page, and a page used to display details about chatting between the user and a specific contact in the recent contacts may be a child page. Similarly, the page used to display details about chatting between the user and a specific contact in the recent contacts may also be a parent page, and a page used to set a background of chatting between the user and the specific contact, a chat message prompt manner, and the like may be a child page.

It can be understood that "parent page" and "child page" are merely words used in the embodiments of this application, meanings represented by the words have been recorded in the embodiments of this application, and names thereof shall not constitute any limitation on this application. In addition, in some other embodiments of this application, "parent page" may also be referred to as another term such as "upper-level page" or "level N interface (for example, level 1 interface)". Likewise, in some other embodiments of this application, "child page" may also be referred to as another term such as "lower-level page" or "level N+1 interface (for example, level 2 interface)". N is a positive integer greater than or equal to 1.

In the method for switching from a parent page to a child page provided in the embodiments of this application, the electronic device first displays the parent page, and when the electronic device detects an operation performed by the user to switch from the parent page to the child page, the electronic device generates a mask (mask). The mask includes a mask layer and a masked layer (that is, the child page), and the mask enables a part of the child page to be covered and opaquely displayed in a right area of the parent page. The mask layer and the masked layer move toward the left side of the screen at a same speed or different speeds, until the child page is displayed on the display in full screen. In this process, the user may see that the child page moves from the right edge to the left edge of the screen for display, until the child page is displayed on the display in full screen.

Similarly, in the method for switching from a child page to a parent page provided in the embodiments of this application, the electronic device first displays the child page, and when the electronic device detects an operation performed by the user to switch from the child page to the parent page, the electronic device generates the parent page and a mask (mask). The mask includes a mask layer and a masked layer (that is, the child page), and the mask enables a part of the child page to be covered and opaquely displayed in a right area of the parent page. The mask layer and the masked layer move toward the right side of the screen at a same speed or different speeds, until the parent page is displayed on the display in full screen. In this process, the user may see that the child page moves from the left edge to the right edge of the screen for display, until the child page is not displayed on the display and the parent page is displayed on the display in full screen.

The manner of switching between a parent page and a child page provided in the embodiments of this application can shorten a user's visual movement line, provide a better visual effect, and improve user experience.

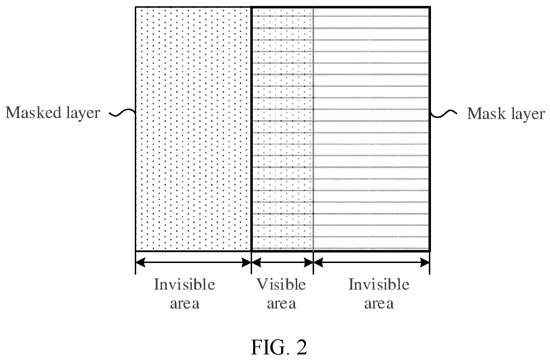

In the embodiments of this application, a mask (mask) is a combination of at least two layers. An uppermost layer is referred to as a mask layer, and a lower layer is referred to as a masked layer. FIG. 2 is a schematic diagram of a mask (mask). As shown in FIG. 2, only an area in which a mask layer and a masked layer overlap can be displayed on the display. In other words, the user can see only the area in which the mask layer and the masked layer overlap and cannot see other areas. In the embodiments of this application, a layer is a film that includes an element such as a text or a graph. One or more layers may be superimposed and combined into a user interface displayed on the display.

In the following embodiments of this application, that the electronic device displays the parent page or the child page in full screen may include any one of the following cases: 1. The parent page or the child page may occupy an entire display area of the display. 2. The parent page or the child page occupies only a part of the display area of the display. For example, when the display of the electronic device is an abnormally cut screen (Notch screen), the parent page or the child page is displayed in a middle part of the abnormally cut screen, and when one or two edge parts have a black screen, it may also be considered that the parent page or the child page is displayed on the display in full screen. For another example, when the electronic device displays the parent page or the child page and simultaneously displays the system-level interface element (for example, the status bar, the navigation bar, or the floating navigation ball), it may also be considered that the parent page or the child page is displayed on the display in full screen.

The following first describes the electronic device in the embodiments of this application. A type of the described electronic device is not specifically limited in this application. The electronic device may be a portable electronic device such as a mobile phone, a tablet computer, a personal digital assistant (personal digital assistant, PDA), a wearable device, or a laptop (laptop). An example embodiment of the portable electronic device includes but is not limited to a portable electronic device using iOS, Android, Microsoft, or another operating system. The portable electronic device may alternatively be another portable electronic device, for example, a laptop (laptop) with a touch-sensitive surface (for example, a touch panel). It should be further understood that, in some other embodiments of this application, the electronic device may be alternatively not a portable electronic device, but a desktop computer with a touch-sensitive surface (for example, a touch panel) or a smart TV.

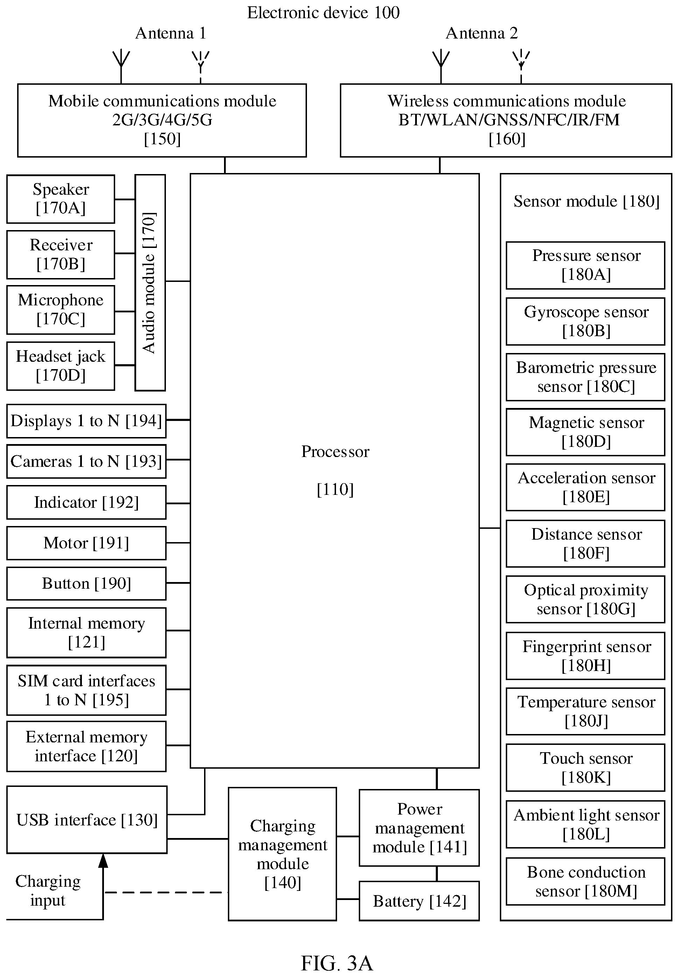

FIG. 3A is a schematic diagram of a structure of an example electronic device 100 according to an embodiment of this application.

As shown in FIG. 3A, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural network processing unit (neural network processing unit, NPU). Different processing units may be independent components, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory, to avoid repeated access and reduce a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDL) and one serial clock line (serial clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call through a Bluetooth headset.

The PCM interface may also be configured to: perform audio communication, and sample, quantize, and code an analog signal. In some embodiments, the audio module 170 may be coupled to the wireless communications module 160 through a PCM bus interface. In some embodiments, the audio module 170 may alternatively transmit an audio signal to the wireless communications module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communications bus, and converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music through the Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by using software. The GPIO interface may be configured as a control signal, or may be configured as a data signal. In some embodiments, the GPIO interface may be configured to connect the processor 110 to the camera 193, the display 194, the wireless communications module 160, the audio module 170, the sensor module 180, or the like. The GPIO interface may be further configured as the I2C interface, the I2S interface, the UART interface, the MIPI interface, or the like.

The USB interface 130 is an interface that conforms to a USB standard specification, and may be specifically a mini USB interface, a micro USB interface, a USB Type-C interface, or the like. The USB interface 130 may be configured to connect to a charger for charging the electronic device 100, may be configured to transmit data between the electronic device 100 and a peripheral device, and may also be configured to connect to a headset to play audio through the headset. The interface may be further configured to connect to another electronic device such as an AR device.

It can be understood that an interface connection relationship between the modules illustrated in this embodiment of this application is merely an example for description, and does not constitute a limitation on the structure of the electronic device 100. In some other embodiments of this application, the electronic device 100 may alternatively use an interface connection manner that is different from that in the foregoing embodiment, or a combination of a plurality of interface connection manners.

The charging management module 140 is configured to receive a charging input from the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input by using a wireless charging coil of the electronic device 100. The charging management module 140 may further supply power to the electronic device by using the power management module 141 while charging the battery 142.

The power management module 141 is configured to connect to the battery 142, the charging management module 140, and the processor 110. The power management module 141 receives an input of the battery 142 and/or an input of the charging management module 140, and supplies power to the processor 110, the internal memory 121, the display 194, the camera 193, the wireless communications module 160, and the like. The power management module 141 may be further configured to monitor parameters such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communications module 150 can provide a solution, applied to the electronic device 100, to wireless communication including 2G, 3G, 4G, 5G, and the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering and amplification on the received electromagnetic wave, and transfer a processed electromagnetic wave to the modem processor for demodulation. The mobile communications module 150 may further amplify a signal modulated by the modem processor, and convert the signal into an electromagnetic wave for radiation through the antenna 1. In some embodiments, at least some function modules in the mobile communications module 150 may be disposed in the processor 110. In some embodiments, at least some function modules in the mobile communications module 150 and at least some modules in the processor 110 may be disposed in a same device.

The modem processor may include a modulator and a demodulator. The modulator is configured to modulate a to-be-sent low frequency baseband signal into a medium and high frequency signal. The demodulator is configured to demodulate a received electromagnetic wave signal into a low frequency baseband signal. Then, the demodulator transmits the low frequency baseband signal obtained through demodulation to the baseband processor for processing. The baseband processor processes the low-frequency baseband signal, and then transfers a processed signal to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in the same device as the mobile communications module 150 or another function module.

The wireless communications module 160 may provide a solution, applied to the electronic device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communications module 160 may be one or more components that integrate at least one communications processing module. The wireless communications module 160 receives an electromagnetic wave through the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 is coupled to the mobile communications module 150, and the antenna 2 is coupled to the wireless communications module 160, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements the display function through the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement the photographing function through the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may further process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural network (neural network, NN) computing processor that rapidly processes input information by referring to a structure of a biological neural network, for example, by referring to a mode of transmission between human brain neurons, and can further perform self-learning continuously. The NPU can implement applications such as intelligent cognition of the electronic device 100, such as image recognition, facial recognition, speech recognition, and text understanding.

The external memory interface 120 may be configured to connect to an external memory card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (such as audio data and a phone book) and the like created when the electronic device 100 is used. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121 and/or the instructions stored in the memory disposed in the processor, to perform various function applications of the electronic device 100 and data processing.

The electronic device 100 may implement audio functions such as music playing and recording through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to code and decode an audio signal. In some embodiments, the audio module 170 may be disposed in the processor 110, or some function modules in the audio module 170 are disposed in the processor 110.

The speaker 170A, also referred to as a "horn", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or a voice message is listened to by using the electronic device 100, the receiver 170B may be put close to a human ear to listen to a voice.

The microphone 170C, also referred to as a "mike" or a "microphone", is configured to convert a sound signal into an electrical signal. When making a call or sending a voice message, a user may make a sound near the microphone 170C through the mouth of the user, to input the sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, for example, a resistive pressure sensor, an inductive pressure sensor, a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change of the capacitance. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an icon of Messages, an instruction for viewing an SMS message is executed. When a touch operation whose touch operation intensity is greater than or equal to the first pressure threshold is performed on an icon of Messages, an instruction for creating an SMS message is executed.

The gyroscope sensor 180B may be configured to determine a motion posture of the electronic device 100. In some embodiments, an angular velocity of the electronic device 100 around three axes (that is, axes x, y, and z) may be determined through the gyroscope sensor 180B. The gyroscope sensor 180B may be configured to perform image stabilization during photographing. For example, when a shutter is pressed, the gyroscope sensor 180B detects an angle at which the electronic device 100 jitters, obtains, through calculation based on the angle, a distance for which a lens module needs to compensate, and allows the lens to cancel the jitter of the electronic device 100 through reverse motion, to implement image stabilization. The gyroscope sensor 180B may be further used in a navigation scenario and a motion-sensing game scenario.

The barometric pressure sensor 180C is configured to measure barometric pressure. In some embodiments, the electronic device 100 calculates an altitude by using the barometric pressure measured by the barometric pressure sensor 180C, to assist in positioning and navigation.

The magnetic sensor 180D includes a Hall sensor. The electronic device 100 may detect opening and closing of a flip cover through the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect magnitudes of accelerations in various directions (usually on three axes) of the electronic device 100, and may detect a magnitude and a direction of gravity when the electronic device 100 is still. The acceleration sensor may be further configured to identify a posture of the electronic device, and is used in an application such as switching between a landscape mode and a portrait mode or a pedometer.

The distance sensor 180F is configured to measure a distance. The electronic device 100 may measure a distance in an infrared or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector such as a photodiode. The light-emitting diode may be an infrared light-emitting diode. The electronic device 100 emits infrared light through the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, through the optical proximity sensor 180G, that the user holds the electronic device 100 close to an ear to make a call, to automatically perform screen-off for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 lowers performance of a processor near the temperature sensor 180J, to reduce power consumption for thermal protection. In some other embodiments, when the temperature is less than another threshold, the electronic device 100 heats the battery 142 to prevent the electronic device 100 from being shut down abnormally because of a low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation on or near the touch sensor. The touch sensor may transfer the detected touch operation to the application processor, to determine a type of a touch event. The display 194 may provide a visual output related to the touch operation. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, to receive a blood pressure beating signal. In some embodiments, the bone conduction sensor 180M may alternatively be disposed in a headset to form a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, may be configured to indicate a charging status and a power change, and may also be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 may be compatible with different types of SIM cards. The SIM card interface 195 may also be compatible with the external storage card. The electronic device 100 interacts with a network by using the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In an embodiment of this application, an Android system with a layered architecture is used as an example to describe a software structure of the electronic device 100.

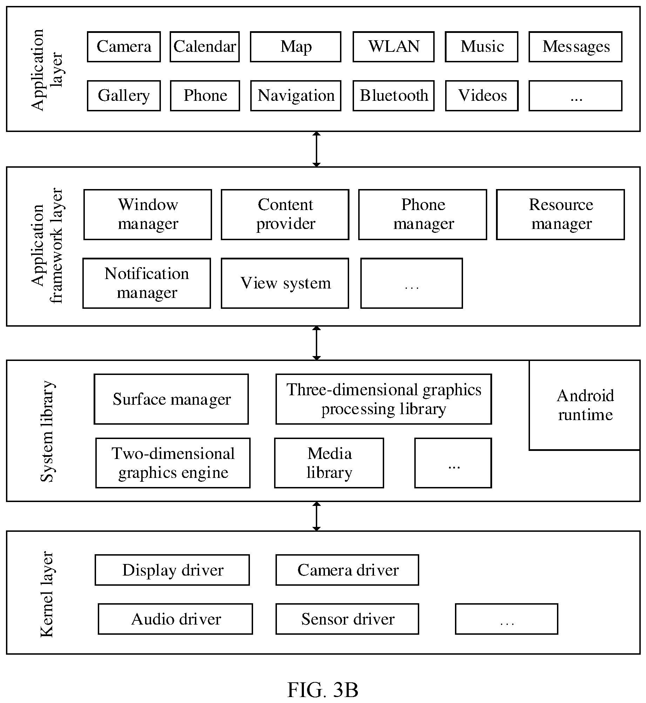

FIG. 3B is a block diagram of the software structure of the electronic device 100 according to an embodiment of this application.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 3B, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 3B, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and a bookmark, a phone book, and the like.

The view system includes visual controls, such as a control for displaying a text and a control for displaying an image. The view system may be configured to construct an application. A display interface may include one or more views. For example, a display interface including an SMS message notification icon may include a text display view and a picture display view.

The phone manager is configured to provide a communication function of the electronic device 100, for example, management of a call status (including answering or declining).

The resource manager provides various resources for an application, such as a localized character string, an icon, a picture, a layout file, and a video file.

The notification manager enables an application to display notification information in a status bar, and may be configured to convey a notification type message. The notification manager may automatically disappear after a short pause without user interaction. For example, the notification manager is configured to notify download completion, provide a message notification, and the like. The notification manager may alternatively be a notification that appears in a top status bar of the system in a form of a graph or a scroll bar text, for example, a notification of an application running on the background or a notification that appears on the screen in a form of a dialog window. For example, text information is displayed in the status bar, an alert sound is played, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language, and a kernel library of Android.

The application layer and the application framework layer run on the virtual machine. The virtual machine executes Java files at the application layer and the application framework layer as binary files. The virtual machine is configured to perform functions such as object life cycle management, stack management, thread management, security and exception management, and garbage collection.

The system library may include a plurality of function modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working procedure of software and hardware of the electronic device 100 with reference to a photographing scenario.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. An example in which the touch operation is a touch/tap operation and a control corresponding to the tap operation is a control of a camera application icon is used. A camera application invokes an interface of the application framework layer, so that the camera application is started. Then, a camera driver is started by invoking the kernel layer, and a static image or a video is captured by using the camera 193.

The following describes examples of some graphical user interfaces implemented on the electronic device 100 according to the embodiments of this application.

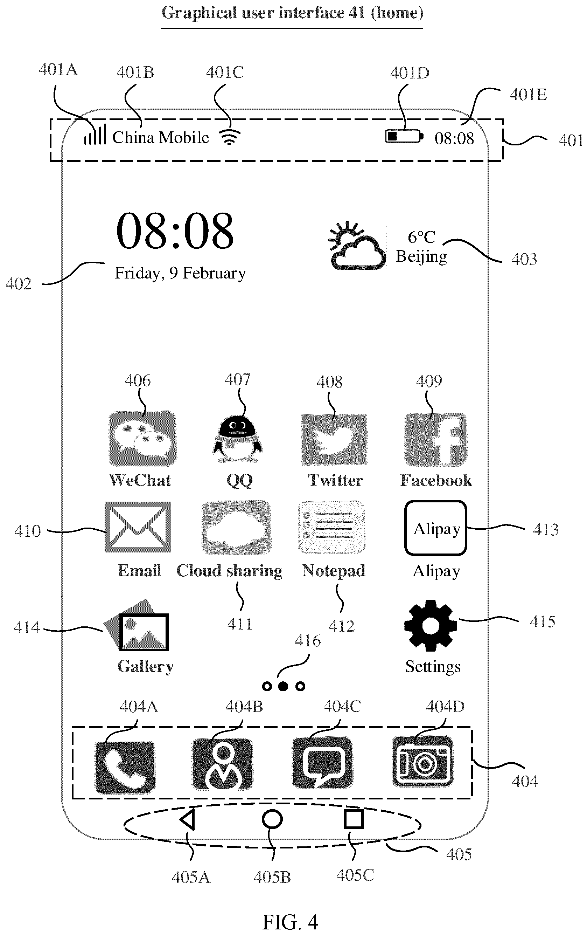

FIG. 4 shows an example of a user interface 41 that is on the electronic device 100 and that is used to display an application installed on the electronic device 100.

The user interface 41 may include a status bar 401, a calendar indicator 402, a weather indicator 403, a tray 404 including commonly used application icons, a navigation bar 405, and other application icons.

The status bar 401 may include one or more signal strength indicators 401A of a mobile communications signal (also referred to as a cellular signal), an operator name (for example, "China Mobile") 401B, one or more signal strength indicators 401C of a wireless fidelity (wireless fidelity, Wi-Fi) signal, a battery status indicator 401D, and a time indicator 401E.

The calendar indicator 402 may be used to indicate a current time, for example, a date, a day of the week, hour-minute information, and the like.

The weather indicator 403 may be used to indicate a weather type such as cloudy to clear or light rain, and may be further used to indicate information such as a temperature.

The tray 404 including commonly used application icons may display an icon 404A of Phone, an icon 404B of Contacts, an icon 404C of Messages, and an icon 404D of Camera.

The navigation bar 405 may include system navigation buttons such as a back button 405A, a home screen button 405B, and a multitask button 405C. When detecting that the user taps the back button 405A, the electronic device 100 may display a previous page of a current page. When detecting that the user taps the home screen button 405B, the electronic device 100 may display a home screen. When detecting that the user taps the multitask button 405C, the electronic device 100 may display a task recently opened by the user. The navigation buttons may alternatively have other names. This is not limited in this application. Not limited to a virtual button, each navigation button in the navigation bar 405 may alternatively be implemented as a physical button.

The other application icons may be, for example, an icon 406 of WeChat (WeChat), an icon 407 of QQ, an icon 408 of Twitter (Twitter), an icon 409 of Facebook (Facebook), an icon 210 of Email, an icon 211 of Cloud sharing, an icon 212 of Notepad, an icon 213 of Alipay, an icon 214 of Gallery, and an icon 215 of Settings. The user interface 41 may further include a page indicator 216. The other application icons may be distributed on a plurality of pages, and the page indicator 216 may be used to indicate a specific page on which an application is currently browsed by the user. The user may slide leftward or rightward in an area including the other application icons, to browse an application icon on another page.

In some embodiments, the user interface 41 shown in FIG. 4 may be a home screen (Home screen). It can be understood that FIG. 4 shows only an example of the user interface on the electronic device 100, and should not constitute a limitation on this embodiment of this application.

The following uses a user interface provided by an application "Contacts (Contacts)" installed on an electronic device as an example to separately describe a method for switching from a parent page to a child page and a method for switching from a child page to a parent page that are provided in this application.

### (1) Method for switching from a parent page to a child page

In a process of switching from a parent page to a child page provided in this embodiment of this application, the electronic device first displays the parent page on a display in full screen, then superimposes and displays the child page on a first side of the display, and moves the child page toward a second side of the display. In the movement process, a displayed part of the child page on the display gradually expands, until the child page is displayed on the display in full screen. The first side is opposite to the second side.

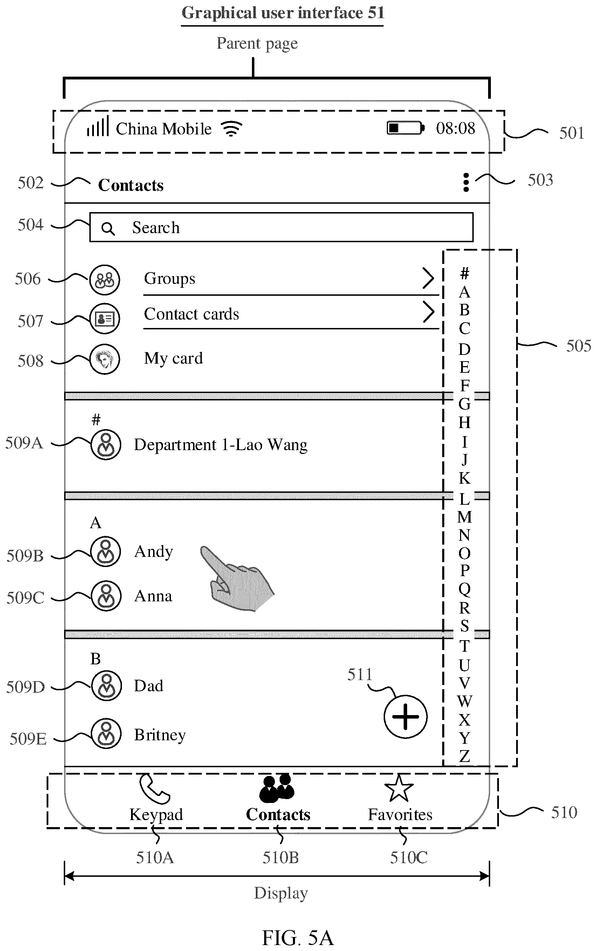

FIG. 5A to FIG. 5D are a schematic diagram of a process of switching from a parent page to a child page according to an embodiment of this application by using an application "Contacts (Contacts)" installed on an electronic device as an example. The application "Contacts (Contacts)" is an application that is installed on an electronic device such as a smartphone or a tablet computer and that is used to display contact information. A name of the application is not limited in this embodiment of this application.

In the embodiment in FIG. 5A to FIG. 5D, a user interface (which may also be referred to as a "contact home page") used to display one or more contact entries and a user interface used to display address book details of a specific contact constitute a parent-child page pair. The user interface used to display one or more contact entries is a parent page, and the user interface used to display address book details of a specific contact is a child page.

The following describes a user interface 51 provided in a UI embodiment shown in FIG. 5A as an example. The user interface 51 may be a user interface opened by a user by tapping the icon 404B of Contacts in FIG. 4.

As shown in FIG. 5A, the electronic device may display the user interface 51 on a display in full screen. The user interface 51 may include a status bar 501 and a user interface (that is, a parent page) that is used to display one or more contact entries.

For the status bar 501, refer to the status bar 401 on the user interface 41 shown in FIG. 4. Details are not described herein again.

The user interface (that is, the parent page) used to display one or more contact entries may include an application title bar 502, a control 503, a search box 504, a letter display bar 505, an entry 506 "Groups", an entry 507 "Contact cards", an entry 508 "My card", one or more contact entries such as 509A to 509E, a menu 510, and a control *511.*

The application title bar 502 may be used to indicate that a current page is used to display one or more pieces of contact information stored in the electronic device. The application title bar 502 may be represented in a form of text information "Contacts", or in an icon form, or in another form.

The control 503 may receive a user operation (for example, a touch operation). In response to the detected user operation, the electronic device may display another control, for example, a control used to set a contact home page.

The entry 506 "Groups" may receive a user operation (for example, a touch operation). In response to the detected user operation, the electronic device may display information about one or more groups created by the user. One group includes one or more contacts.

The entry 507 "Contact cards" may receive a user operation (for example, a touch operation). In response to the detected user operation, the electronic device may display information carried in one or more paper business cards that are scanned (for example, scanned through a camera).

The entry 508 "My card" may receive a user operation (for example, a touch operation). In response to the detected user operation, the electronic device may display information about a card of the user that is created by the user.

The contact entry is used to display one or more pieces of contact information stored in the electronic device. The contact information may include an avatar, a name, a nickname, a phone number, and the like. When a plurality of contact entries are displayed on the user interface used to display one or more contact entries, the plurality of contact entries may be arranged from top to bottom in an order of initials of contact names from "A" to "Z". The user may slide up and down an area used to display contact entries on the user interface 51, so as to view more contact entries.

The contact entry may further receive a user operation (for example, a touch operation). In response to the detected user operation, the electronic device may display a page used to display address book details of a contact corresponding to the entry.

The menu 510 includes a control 510A, a control 510B, and a control 510C. Content displayed on the user interface used to display one or more contact entries is related to a currently selected control in the menu 510. As shown in FIG. 5A, in the menu 510 currently, if the control 510B is selected, the user interface 51 is used to display one or more contact entries stored in the electronic device; if the control 510A is selected, in other words, when the control 510A receives a user operation (for example, a touch operation), the electronic device may display a dialer screen in response to the detected user operation; and if the control 510C is selected, in other words, when the control 510C receives a user operation (for example, a touch operation), the electronic device may display information about a favorite contact in response to the detected user operation.

The control 511 may receive a user operation (for example, a touch operation). In response to the detected user operation, the electronic device may display an interface used to add a new contact.

As shown in FIG. 5A, the contact entry 509B may receive a user operation (for example, a touch operation). In response to the user operation, the electronic device may display, on the display in full screen, a page (that is, a child page) used to display address book details of a contact "Andy" corresponding to the contact entry 509B. The user operation (for example, the touch operation) received by the electronic device on the contact entry 509B of the user interface 51 is a user operation used to switch from a parent page to a child page.

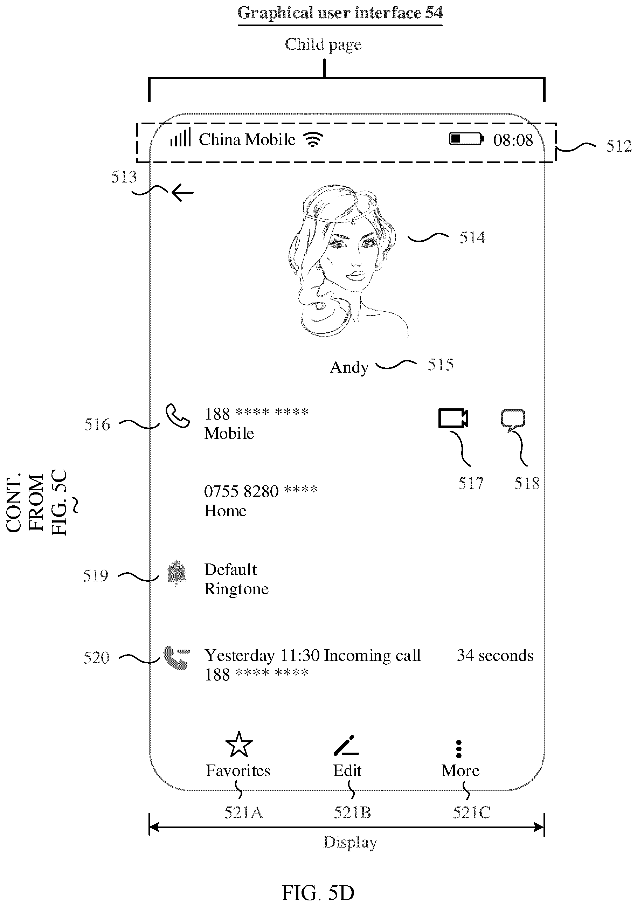

A user interface 54 shown in FIG. 5D illustrates one implementation of the page (that is, the child page) used to display the address book details of the contact "Andy" corresponding to the contact entry 509B.

As shown in FIG. 5D, the user interface 54 may include a status bar 512 and a user interface (that is, a child page) used to display address book details of a specific contact.

For the status bar 512, refer to the status bar 401 on the user interface 41 shown in FIG. 4. Details are not described herein again.

The user interface (that is, the child page) used to display address book details of a specific contact may include a back button 513, a contact avatar 514, a contact name 515, a phone number or fixed-line phone number display area 516, a control 517, a control 518, an incoming call ringtone information display area 519, a recent call record display area 520, a control 521A, a control 521B, and a control 521C.

The back button 513 may receive a user operation (for example, a touch operation). In response to the detected user operation, the electronic device may return back to the user interface 51.

The contact avatar 514 may be an avatar of a contact (for example, the contact "Andy") stored in the electronic device.

The contact name 515 may be a name of a contact (for example, the contact "Andy") stored in the electronic device, for example, text information "Andy".

The phone number or fixed-line phone number display area 516 is used to display a phone number or a fixed-line phone number of a contact (for example, the contact "Andy") stored in the electronic device. The control 517 may receive a user operation (for example, a touch operation). In response to the detected user operation, the electronic device may initiate a video call to the contact. The control 518 may receive a user operation (for example, a touch operation). In response to the detected user operation, the electronic device may display an interface of short message chatting with the contact.

The incoming call ringtone information display area 519 may display information about a ringtone that is responded to when the electronic device receives an incoming call initiated by the contact.

The recent call record display area 520 may display a detailed record of a last call between the electronic device and the contact. The record may include a call time, an incoming/outgoing call, call duration, an incoming call number, and the like. For example, the record may be text information "11:30 yesterday, incoming call, 34 seconds" on the user interface 54 shown in FIG. 5D.

The control 521A may receive a user operation (for example, a touch operation). In response to the detected user operation, the electronic device may save the contact (for example, the contact "Andy") to Favorites.

The control 521B may receive a user operation (for example, a touch operation). In response to the detected user operation, the electronic device displays an interface used to edit information about the contact (for example, the contact "Andy"). The contact information may include an avatar, a name, a phone number, a fixed-line phone number, and the like.

The control 521C may receive a user operation (for example, a touch operation). In response to the detected user operation, the electronic device may display more controls, for example, a control used to delete the contact and a control used to add the contact to a blacklist.

In this embodiment of this application, a process in which the display of the electronic device switches from displaying the user interface 51 to displaying the user interface 54, that is, a process of switching from a parent page to a child page, meets a user expectation, provides a natural visual effect, achieves a relatively short user's visual movement line, and provides optimal use experience for the user.

FIG. 5A to FIG. 5D show a process of switching from displaying the user interface used to display one or more contact entries to displaying the user interface used to display address book details of a specific contact, that is, the process of switching from a parent page to a child page.

Refer to FIG. 5A to FIG. 5D. In response to the user operation detected on the contact entry 509B on the user interface 51, the electronic device generates or opens the corresponding child page (that is, the page used to display the address book details of the contact "Andy"), and moves the child page from a right side to a left side of the display to display the child page, until the child page is displayed on the display in full screen.

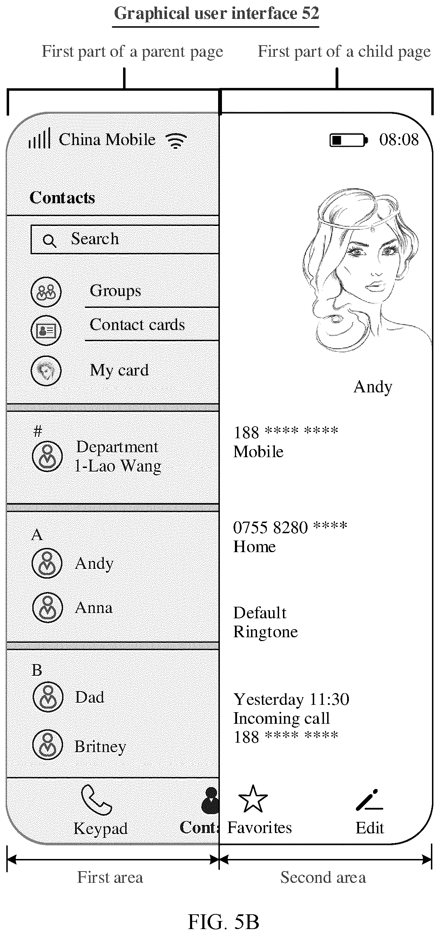

FIG. 5B to FIG. 5D show user interfaces provided by the electronic device on the display at three different time points in a process of moving the child page from the right side to the left side of the display for display.

Refer to a user interface 52 shown in FIG. 5B. The electronic device may continuously display a first part of the parent page in a first area of the display, and display a first part of the child page in a second area of the display. Herein, on the user interface 52 shown in FIG. 5B, it may be considered that the electronic device superimposes and displays the first part of the child page in the second area of the display.

In this embodiment of this application, the first area of the display is a left area of the display, and the second area of the display is a right area of the display. The first area and the second area do not overlap and are combined into a display area of the display. In a possible implementation, refer to FIG. 5B. The first area is a left half of the display, and the second area is a right half of the display. In another possible implementation, the first area or the second area may not be a rectangular area, but may be implemented in another shape, for example, a fan shape, a semi circle shape, a semi elliptic shape, or another irregular shape. For example, the first area may alternatively be a fan-shaped area on the upper left of the display.

Locations of the first area and the second area in the display may be determined in the following several manners: 1. The locations of the first area and the second area in the display may be preset by the electronic device. For example, the electronic device may set the left half of the display as the first area, and set the right half of the display as the second area. 2. The locations of the first area and the second area in the display may be independently set by the user based on a preference of the user. For example, the user may set the left half of the display as the first area, and set the right half of the display as the second area.

In this embodiment of this application, the first part of the parent page is a part of the parent page that is displayed in the first area of the display. For example, refer to FIG. 5B. The first part of the parent page may be a left half of the parent page.

In this embodiment of this application, the first part of the child page is any part of the child page. In some embodiments, the first part of the child page may be a middle part of the child page. In this embodiment of this application, a height of the middle part of the child page is the same as a height of the child page, and a width of the middle part of the child page is less than a width of the child page. An area size of the middle part of the child page is not limited in this embodiment of this application. In some embodiments, the middle part of the child page does not include two edges of the child page. In addition to the middle part of the child page, the first part of the child page may alternatively be a left half, a right half, or any other part of the child page. In some embodiments of this application, the first part of the child page may not be a rectangular area, but may be implemented in another shape, for example, a fan shape, a semi circle shape, a semi elliptic shape, or another irregular shape. For example, the first part of the child page may alternatively be a fan-shaped part on the upper right of the child page.

The first part of the child page may be determined in the following several manners: 1. The first part of the child page may be preset by the electronic device. For example, the electronic device may set the middle part of the child page as the first part of the child page. 2. The first part of the child page may be independently set by the user based on a preference of the user. For example, the user may set the left half of the child page as the first part of the child page.

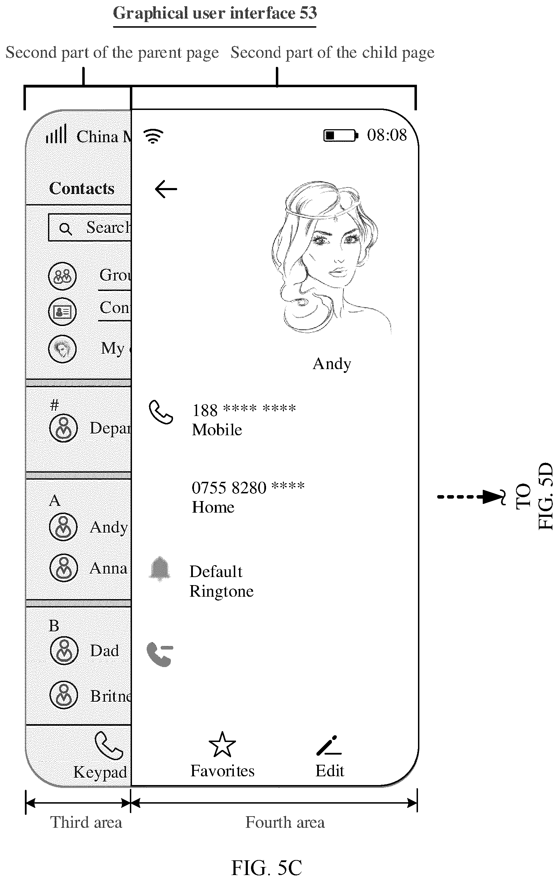

After displaying the user interface 52 shown in FIG. 5B for a period of time (for example, 200 milliseconds), the electronic device may display a user interface 53 shown in FIG. 5C on the display.

Refer to FIG. 5C. The electronic device may continuously display a second part of the parent page in a third area of the display, and display a second part of the child page in a fourth area of the display. Herein, on the user interface 53 shown in FIG. 5C, it may be considered that the electronic device superimposes and displays the second part of the child page in the fourth area of the display.

In this embodiment of this application, the third area of the display is a left area of the display, and the third area belongs to the first area. The fourth area of the display is a right area of the display, and the fourth area includes the second area. The third area and the fourth area do not overlap and are combined into the display area of the display. For example, refer to FIG. 5C. The third area may be a left one-third part of the display, and the fourth area may be a right two-thirds part of the display. In some embodiments of this application, the third area or the fourth area may not be a rectangular area, but may be implemented in another shape, for example, a fan shape, a semi circle shape, a semi elliptic shape, or another irregular shape. For example, the fourth area may alternatively be a fan-shaped area on the upper right of the display.

In this embodiment of this application, the second part of the parent page is a part of the parent page that is displayed in the third area of the display. The second part of the parent page belongs to the first part of the parent page. For example, refer to FIG. 5C. The second part of the parent page may be a left one-third part of the parent page.

In this embodiment of this application, the second part of the child page includes the first part of the child page. For example, the second part of the child page may be a left two-thirds part of the child page. In some embodiments of this application, the second part of the child page may not be a rectangular area, but may be implemented in another shape, for example, a fan shape, a semi circle shape, a semi elliptic shape, or another irregular shape. For example, the second part of the child page may alternatively be a fan-shaped part on the upper right of the child page.

After displaying the user interface 53 shown in FIG. 5C for a period of time (for example, 200 milliseconds), the electronic device may display the user interface 54 shown in FIG. 5D on the display. For the user interface 54, refer to related descriptions in the foregoing embodiment. Details are not described herein again.

In some embodiments of this application, in the process of switching from the parent page to the child page, the electronic device may further prompt the user that the electronic device is currently switching from the parent page to the child page. The prompt manner may include: 1. In the process of switching from the parent page to the child page, the electronic device simultaneously displays the parent page and the child page in different display forms. The page display form may include a page background color, page transparency, a page border, or the like. For example, refer to FIG. 5B and FIG. 5C. When the electronic device simultaneously displays the parent page and the child page on the display, a background color of the parent page is light black, and a background color of the child page is white. 2. In the process in which the electronic device switches from the parent page to the child page, a background color of the parent page displayed on the display gradually becomes darker, or transparency of the parent page becomes higher. 3. In the process in which the electronic device switches from the parent page to the child page, transparency of the child page displayed on the display becomes lower.

It can be understood that FIG. 5B to FIG. 5D show only the user interfaces provided by the electronic device on the display at the three different time points in the process of moving the child page from the right side to the left side of the display for display. In some embodiments of this application, at other time points during which the electronic device displays FIG. 5A and FIG. 5B, or FIG. 5B and FIG. 5C, or FIG. 5C and FIG. 5D, the electronic device may further provide other similar user interfaces on the display, which are not listed one by one herein.

It can be understood that, in the process of switching from the parent page to the child page provided in the embodiment in FIG. 5A to FIG. 5D, the electronic device may continuously display, on the provided user interfaces, system-level interface elements provided by an operating system, for example, the status bars in the user interfaces shown in FIG. 5A to FIG. 5D.

It can be learned from the embodiment in FIG. 5A to FIG. 5D that, when the electronic device displays the parent page on the display in full screen, if the electronic device detects an operation used to switch from the parent page to the child page, in response to the operation, the electronic device may switch from displaying the parent page in full screen to superimposing and displaying the middle part of the child page on the first side of the display; and control the child page to gradually move toward the second side of the display and expand a displayed part of the child page on the display, until the child page is displayed on the display in full screen. The height of the middle part of the child page is the same as the height of the child page, and the width of the middle part of the child page is less than the width of the child page. The first side may be a direction in which the second area is located in the display, and the second side may be a direction in which the first area is located in the display. In some embodiments, the first side of the display may be a right side of the display, and the second side of the display may be a left side of the display.

In a process of switching from a parent page to a child page, compared with the conventional technology in which a displayed part of a child page on a display expands from a left edge part of the child page, a manner in which a displayed part of a child page on a display gradually expands from a middle part of the child page in this embodiment of this application provides a different switching effect and is more interesting.

In some embodiments, the electronic device may gradually expand the displayed part of the child page on the display toward the first side and the second side. Specifically, the electronic device expands the displayed part of the child page on the display by using the following several policies:
1. The electronic device first expands the displayed part of the child page on the display toward the first side, and then expands the displayed part of the child page on the display toward the second side, until the child page is displayed on the display in full screen.
2. The electronic device first expands the displayed part of the child page on the display toward the second side, and then expands the displayed part of the child page on the display toward the first side, until the child page is displayed on the display in full screen.
3. The electronic device simultaneously expands the displayed part of the child page on the display toward the first side and the second side, until the child page is displayed on the display in full screen.

The electronic device expands the displayed part of the child page on the display by using any one of the foregoing policies, so that interest of switching between the parent page and the child page can be improved.

After the electronic device expands the displayed part of the child page on the display toward the first side, the child page displayed on the electronic device includes the middle part of the child page and a first side part of the child page. The first side part of the child page borders the middle part of the child page. A height of the first side part of the child page is the same as the height of the child page, and a width of the first side part of the child page is less than the width of the child page.

After the electronic device expands the displayed part of the child page on the display toward the second side, the child page displayed on the electronic device includes the middle part of the child page and a second side part of the child page. The second side part of the child page borders the middle part of the child page. A height of the second side part of the child page is the same as the height of the child page, and a width of the second side part of the child page is less than the width of the child page.

By using the user interfaces shown in FIG. 5A to FIG. 5D, the user may see that an area occupied by the child page on the display gradually expands from the right side to the left side of the display and an area occupied by the parent page on the display gradually narrows toward the left side of the display, until the child page is displayed on the display in full screen. This manner provided by the electronic device to switch from a parent page to a child page meets a user expectation, provides a natural visual effect, achieves a relatively short user's visual movement line, and provides optimal use experience for the user.

In this embodiment of this application, in the process in which the electronic device switches from the parent page to the child page, the displayed part of the child page on the display is implemented by using a mask (mask). A child page and a mask layer constitute a mask (mask), and the child page is a masked layer. A part in which the child page (the masked layer) and the mask layer overlap and that is located in the display is a part of the child page that is displayed by the electronic device on the display.

In this embodiment of this application, because the mask (mask) including the child page and the mask layer is located on the parent page, a part that is in the mask (mask) and in which the mask layer and the masked layer do not overlap does not affect display of the parent page. If partial content in the mask (mask) covers a part of the parent page, and if the partial content in the mask (mask) is not the part (that is, an invisible part) in which the child page (the masked layer) and the mask layer overlap, the electronic device still displays the parent page in the area.

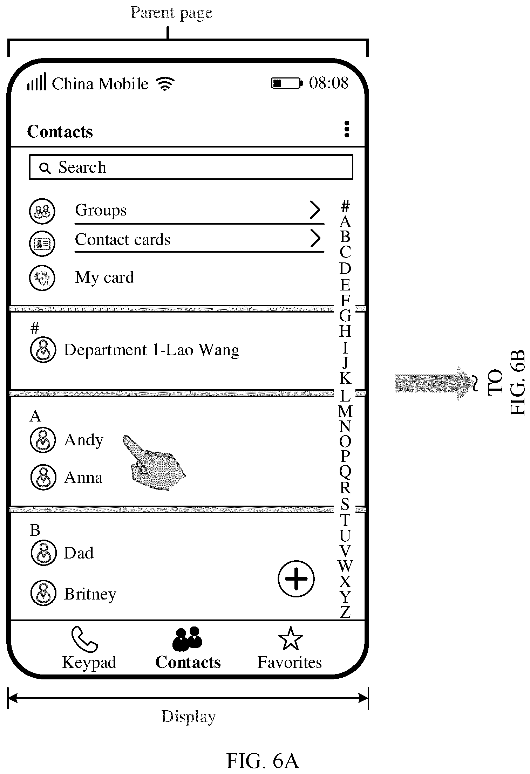

FIG. 6A to FIG. 6D show an example of a manner in which an electronic device displays, in a process of switching from a parent page to a child page, a part of or the entire child page by using a mask (mask). In the embodiment in FIG. 6A to FIG. 6D, both the parent page and the child page are provided by an application "Contacts (Contacts)". The parent page is a "contact home page", and the child page is a page used to display address book details of a specific contact (for example, a contact "Andy").

FIG. 6A shows a user interface displayed by the electronic device on a display in full screen. The user interface includes a status bar and a "contact home page" (that is, the parent page). For the user interface shown in FIG. 6A, refer to related descriptions in FIG. 5A. Details are not described herein again.

In response to a user operation detected on a contact entry "Andy" on the user interface shown in FIG. 6A, the electronic device may generate or open a corresponding child page (a masked layer), and simultaneously generate a mask layer.

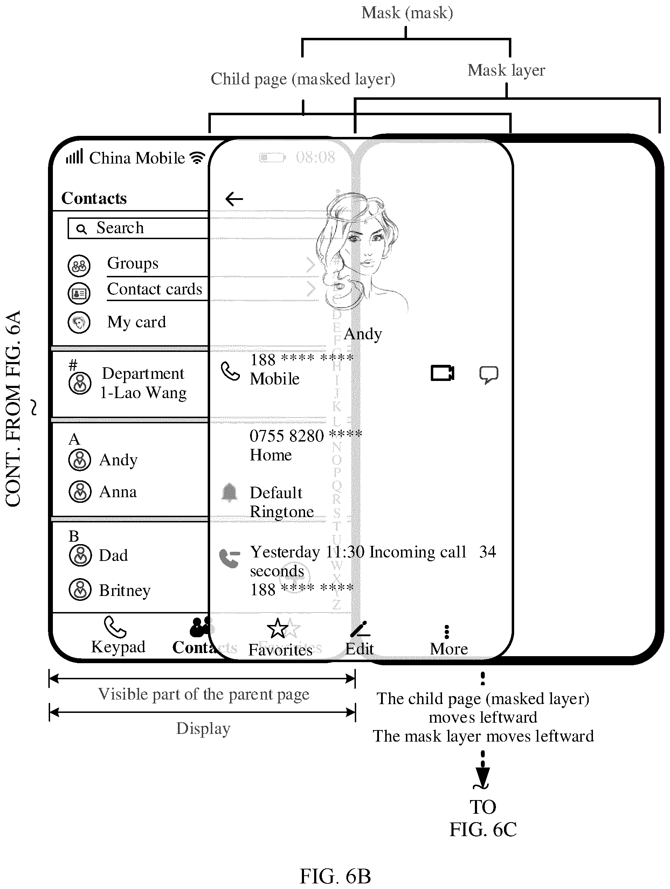

FIG. 6B shows an example of the child page (the masked layer) and the mask layer that are generated by the electronic device. As shown in FIG. 6B, a left half of the child page (the masked layer) generated by the electronic device is located in a left area in the display, a right half of the child page (the masked layer) is located in a right area outside the display, and the mask layer is located in the right area outside the display. A size of the child page (the masked layer) and a size of the mask layer are basically the same as a size of the display. Content of the child page (the masked layer) and content of the mask layer partially overlap, and the overlapped content is located in a right area outside the display. When the electronic device generates the child page (the masked layer) and the mask layer shown in FIG. 6B, because the overlapped content between the child page (the masked layer) and the mask layer is located outside the display, the parent page is still displayed on the display in full screen, in other words, the user interface shown in FIG. 6A is still displayed on the display.

After generating the child page (the masked layer) and the mask layer, the electronic device may control the child page (the masked layer) and the mask layer to move from a right side to a left side of the display. The parent page remains stationary while the child page (the masked layer) and the mask layer move from the right side to the left side of the display. A movement speed of the child page (the masked layer) may be the same as or different from a movement speed of the mask layer. This is not limited in this application. The movement speed of the child page (the masked layer) and the movement speed of the mask layer each are greater than or equal to 0. The child page (the masked layer) and the mask layer may perform acceleration movement, uniform movement, or deceleration movement. The acceleration movement or the deceleration movement may make the process of switching from the parent page to the child page more meet a user expectation. The child page (the masked layer) and the mask layer may simultaneously or not simultaneously move. This is not limited in this application.

According to the invention, in a process in which the electronic device controls the child page (the masked layer) and the mask layer to move, the part in which the child page (the masked layer) and the mask layer overlap is located in the display, and after both the child page (the masked layer) and the mask layer stop moving finally, all of the content of the child page (the masked layer) is covered by the mask layer and the entire child pages is located in the display.

A left edge of the child page (the masked layer) stops moving after moving to a left edge of the display. A left edge of the mask layer stops moving after moving to the left edge of the display.

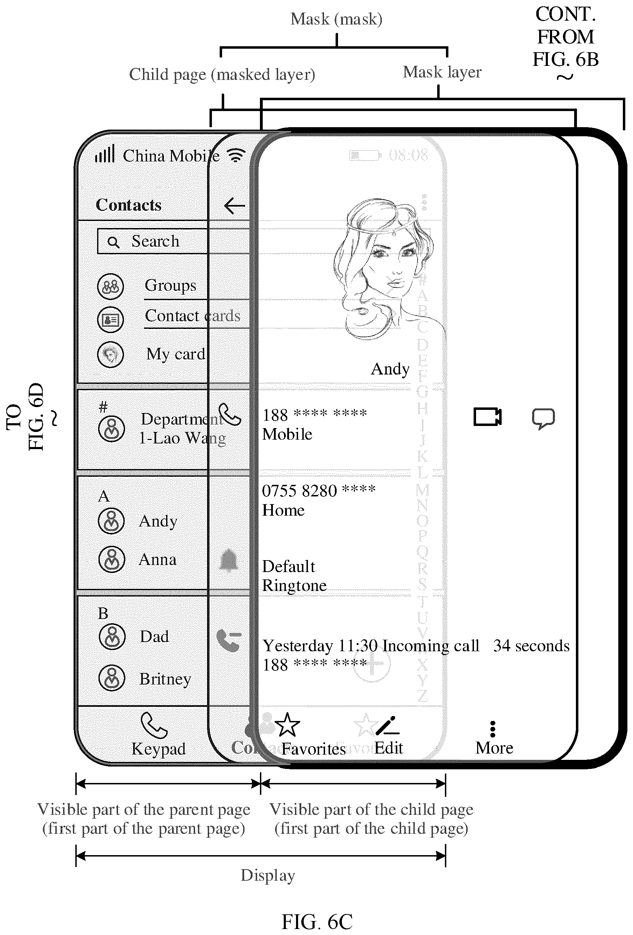

FIG. 6C shows an example of locations of the child page (the masked layer) and the mask layer after the child page (the masked layer) and the mask layer move for a period of time. In a process in which the child page (the masked layer) and the mask layer move in FIG. 6B and FIG. 6C, the movement speed of the mask layer is greater than the movement speed of the child page (the masked layer). As shown in FIG. 6C, a part of content of the child page (the masked layer) is located in a right area in the display, and the other part of content is located in a right area outside the display; and a part of content of the mask layer is located in a right area in the display, and the other part of content is located in a right area outside the display. The content of the child page (the masked layer) and the content of the mask layer partially overlap and are located in the display. The partial content may be displayed on the display. The partial content is a visible part of the child page shown in FIG. 6C. Content that is in the parent page and that does not overlap the visible part may also be displayed on the display. In other words, when the child page (the masked layer) and the mask layer move to locations shown in FIG. 6C, the electronic device simultaneously displays the parent page and the child page on the display.

For example, refer to FIG. 5B. When the child page (the masked layer) and the mask layer move to the locations shown in FIG. 6C, the electronic device may display the user interface 52 shown in FIG. 5B, to be specific, the electronic device may continuously display the first part of the parent page in the first area of the display, and display the first part of the child page in the second area of the display. Herein, for the first part of the parent page and the first part of the child page, refer to related descriptions in the foregoing embodiment.

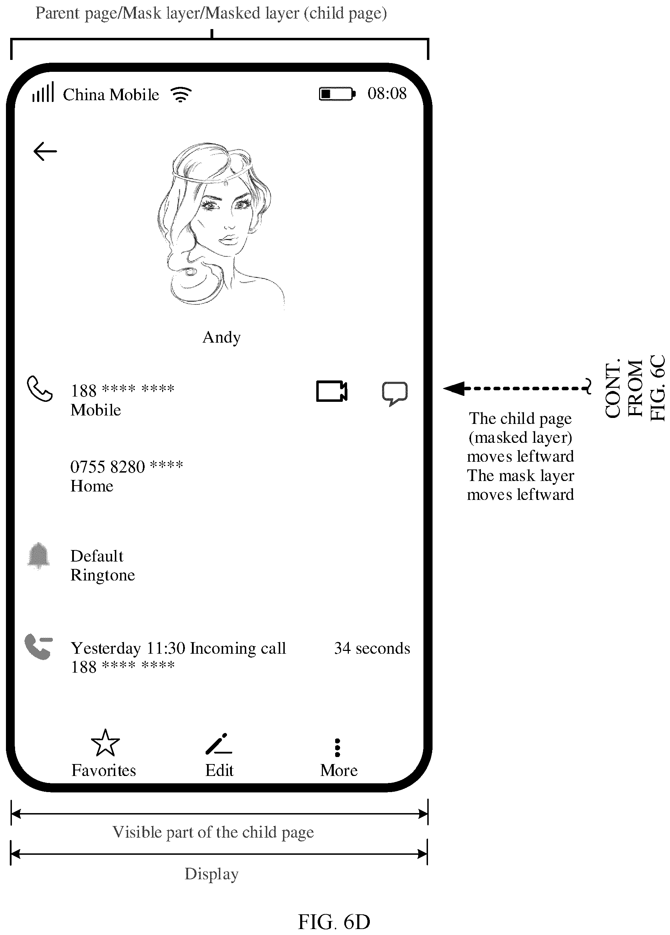

FIG. 6D shows an example of a user interface displayed on the display after the left edge of the child page (the masked layer) moves to the left edge of the display and the left edge of the mask layer moves to the left edge of the display. As shown in FIG. 6D, the child page (the masked layer) moves to the left edge of the display, the mask layer also moves to the left edge of the display, and both the child page (the masked layer) and the mask layer are located in the display. The content of the child page (the masked layer) and the content of the mask layer all overlap and are located in the display. All of the content of the child page (the masked layer) may be displayed on the display. All of the content is a visible part of the child page shown in FIG. 6D. Because the parent page is entirely covered by the overlapped part between the child page (the masked layer) and the mask layer, the parent page is not displayed on the display. In other words, when the child page (the masked layer) and the mask layer move to locations shown in FIG. 6D, the electronic device displays the child page on the display in full screen.

For example, refer to FIG. 5D. When the child page (the masked layer) and the mask layer move to the locations shown in FIG. 6D, the electronic device may display the user interface 54 shown in FIG. 5D, to be specific, the electronic device displays the child page on the display in full screen.

According to the invention, after the electronic device displays the child page on the display in full screen, the electronic device may maintain the generated mask (mask), to be specific, the electronic device continuously constitutes the mask (mask) by using the mask layer and the child page (the masked layer). Alternatively, the electronic device may stop maintaining the mask (mask), to be specific, the electronic device does not constitute the mask by using the mask layer and the child page (the masked layer), for example, stops generating the mask layer.

It can be understood that FIG. 6A to FIG. 6D show only an example of the child page (the masked layer) and the mask layer that are generated by the electronic device, the movement directions thereof, the movement speeds thereof, and the like. There may be different child pages (masked layers), mask layers, movement directions thereof, movement speeds thereof, and the like during actual application. This should not constitute a limitation.

The locations of the child page (the masked layer) and the mask layer shown in FIG. 6A to FIG. 6D are not limited. In some embodiments, when the electronic device generates the child page (the masked layer) and the mask layer, the child page (the masked layer) and the mask layer may alternatively be at other locations. For example, the child page (the masked layer) may alternatively be entirely located in the display, and the mask layer may alternatively be partially located in the display.

The movement directions and movement routes of the child page (the masked layer) and the mask layer shown in FIG. 6A to FIG. 6D are not limited. In some embodiments, the electronic device may alternatively control the child page (the masked layer) and the mask layer to move in another direction, for example, a direction from a lower right corner to an upper left corner of the display, or may control the child page (the masked layer) and the mask layer to move along another route, for example, a curve.

In this embodiment of this application, after the electronic device generates the child page (the masked layer) and the mask layer, the movement speeds of the child page (the masked layer) and the mask layer may be preset based on user experience.

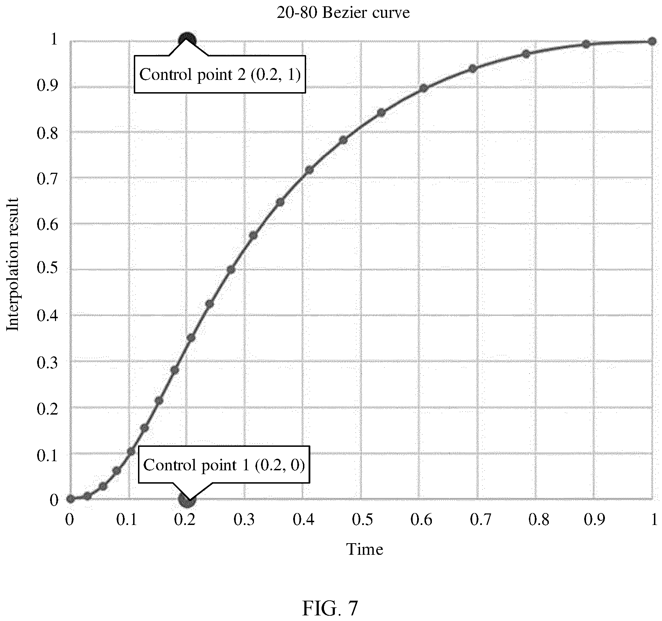

For example, FIG. 7 shows a possible Bezier curve. The Bezier curve may reflect a movement speed or a movement rhythm of the child page (the masked layer) or the mask layer in a case in which the electronic device generates the child page (the masked layer) and the mask layer at the locations shown in FIG. 6B and the child page (the masked layer) and the mask layer simultaneously move.

Bezier is a common mathematical model for a curve path. A cubic Bezier curve is controlled by four points in sequence. When the Bezier curve is used as an animation domain interpolator, a start point (a control point 1) and an end point (a control point 2) of the Bezier curve are fixed, and the remaining two points perform path control.

As shown in FIG. 7, the Bezier curve is determined by four values 0.2, 0, 0.2, and 1 of the start point (the control point 1) and the end point (the control point 2). A vertical coordinate of the Bezier curve is an interpolation result, and a horizontal coordinate is a ratio of a current time point to entire animation duration (that is, duration of switching from a parent page to a child page). For example, when the horizontal coordinate is 0, it may indicate a moment at which the electronic device receives a user operation used to switch from the parent page to the child page (for example, a moment at which the electronic device receives the tap operation on the contact entry 509B on the user interface 51 shown in FIG. 5A); and when the horizontal coordinate is 0.5, it may indicate an intermediate time point in a process in which the electronic device switches from the parent page to the child page. A slope of the Bezier curve may be used to represent the movement speed of the child page (the masked layer) and/or the mask layer.

It can be learned from FIG. 6A to FIG. 6D that, in this embodiment of this application, the part of the child page that is displayed on the display in the process of switching from the parent page to the child page is implemented by using the mask (mask). After the user triggers the electronic device to switch from the parent page to the child page, the electronic device generates the mask. The mask includes the mask layer and the masked layer (the child page). If the part in which the mask layer and the masked layer (the child page) overlap and that is located in the display is the middle part of the child page, the user may see the middle part of the child page on the display. As the mask layer and the masked layer (the child page) move from right to left, the user may see that the displayed part of the child page on the display gradually expands, and the displayed part of the parent page on the display gradually narrows on the display, until the child page is displayed on the display in full screen. Such a manner of switching from a parent page to a child page can provide a better visual effect for the user and improve user experience.

### (2) Method for switching from a child page to a parent page

In this embodiment of this application, compared with a process of switching from a parent page to a child page, a process of switching from a child page to a parent page has an opposite movement direction of the child page. Details are described below.

In the process of switching from the child page to the parent page provided in this embodiment of this application, the electronic device first displays the child page on a display in full screen, then displays the parent page on the display, superimposes and displays the child page on a first side of the display, and moves the child page toward the first side of the display. In the movement process, a displayed part of the child page on the display gradually narrows, until the child page is not displayed on the display and the parent page is displayed in full screen. The first side is opposite to the second side.

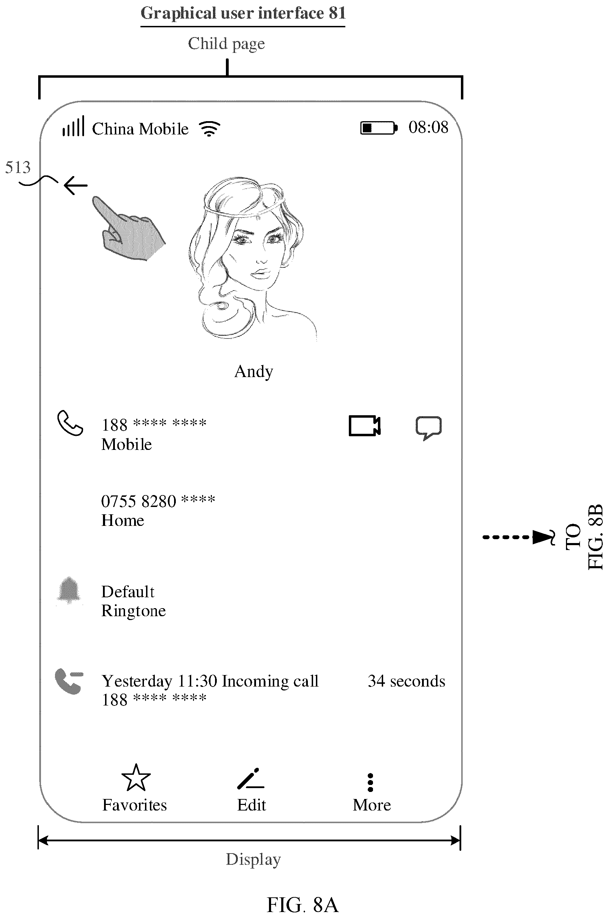

FIG. 8A to FIG. 8D are a schematic diagram of a process of switching from a child page to a parent page according to an embodiment of this application by using an application "Contacts (Contacts)" installed on an electronic device as an example.

In the embodiment in FIG. 8A to FIG. 8D, a user interface (which may also be referred to as a "contact home page") used to display one or more contact entries and a user interface used to display address book details of a specific contact constitute a parent-child page pair. The user interface used to display one or more contact entries is a parent page, and the user interface used to display address book details of a specific contact is a child page.

The following describes a user interface 81 provided in a UI embodiment shown in FIG. 8A as an example.

Refer to FIG. 8A. The electronic device may display the user interface 81 on a display in full screen. The user interface 81 includes a status bar and a user interface (that is, a child page) used to display address book details of a specific contact (for example, a contact "Andy"). For the user interface 81, refer to the user interface 54 shown in FIG. 5D. Details are not described herein again.

A back button 513 in the user interface 81 shown in FIG. 8A may receive a user operation (for example, a touch operation). In response to the user operation, the electronic device may display, on the display in full screen, a user interface (that is, a parent page) used to display one or more contact entries. The user operation (for example, the touch operation) received by the electronic device on the back button 513 of the user interface 81 is a user operation used to switch from a child page to a parent page.

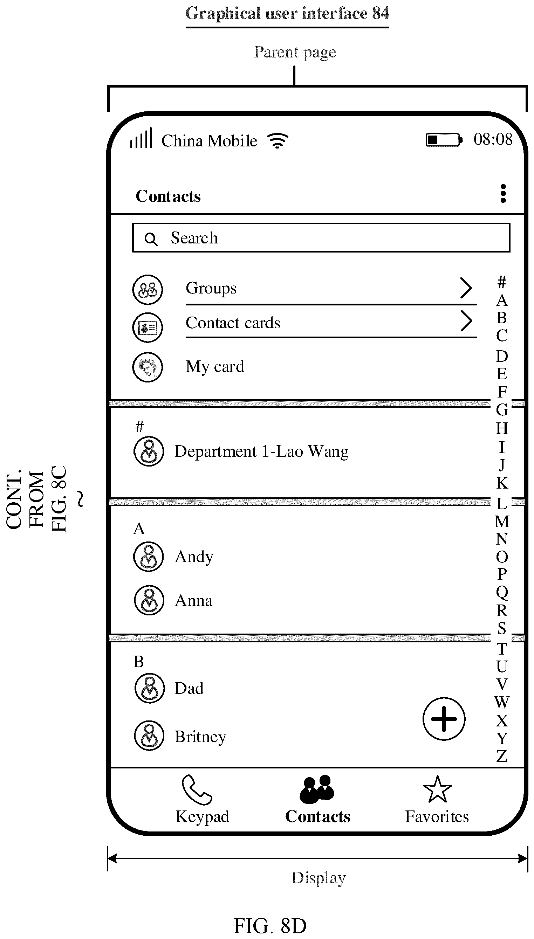

A user interface 84 shown in FIG. 8D may be an implementation of a user interface (that is, a parent page) used to display one or more contact entries. As shown in FIG. 8D, the user interface 84 may include a status bar 512 and a user interface (that is, a child page) used to display address book details of a specific contact (for example, the contact "Andy"). For the user interface 84, refer to the user interface 51 shown in FIG. 5A. Details are not described herein again.

In this embodiment of this application, a process in which the display of the electronic device switches from a user interface used to display address book details of a specific contact to a user interface used to display one or more contact entries is a process of switching from a child page to a parent page. This meets a user expectation, provides a natural visual effect, achieves a relatively short user's visual movement line, and provides optimal use experience for the user.

FIG. 8A to FIG. 8D show the process of switching from a user interface used to display address book details of a specific contact to a user interface used to display one or more contact entries, namely, the process of switching from a child page to a parent page.

Refer to FIG. 8A to FIG. 8D. In response to the user operation detected on the back button 513 in the user interface 81, the electronic device generates or opens a corresponding parent page (that is, a "contact home page"), and moves a child page from a left side to a right side of the display for display, until the child page is not displayed on the display and the parent page is displayed in full screen.

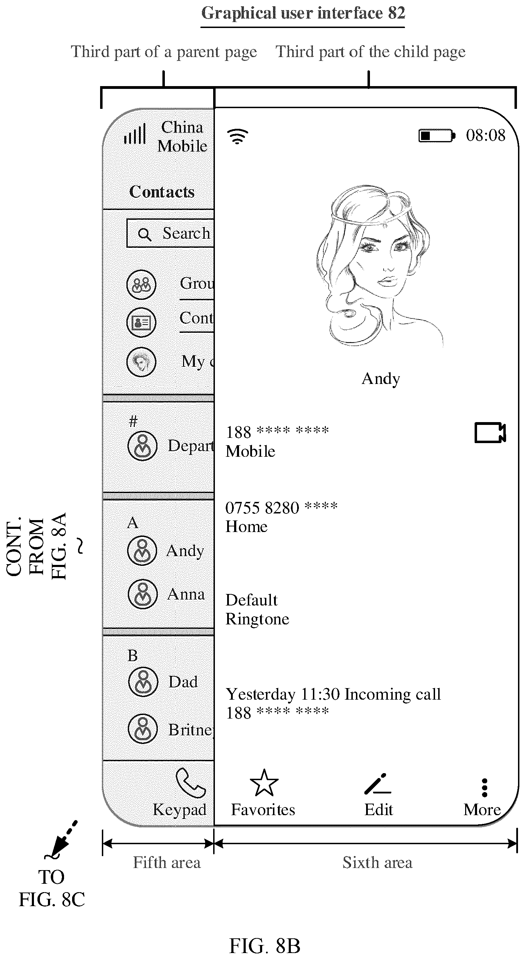

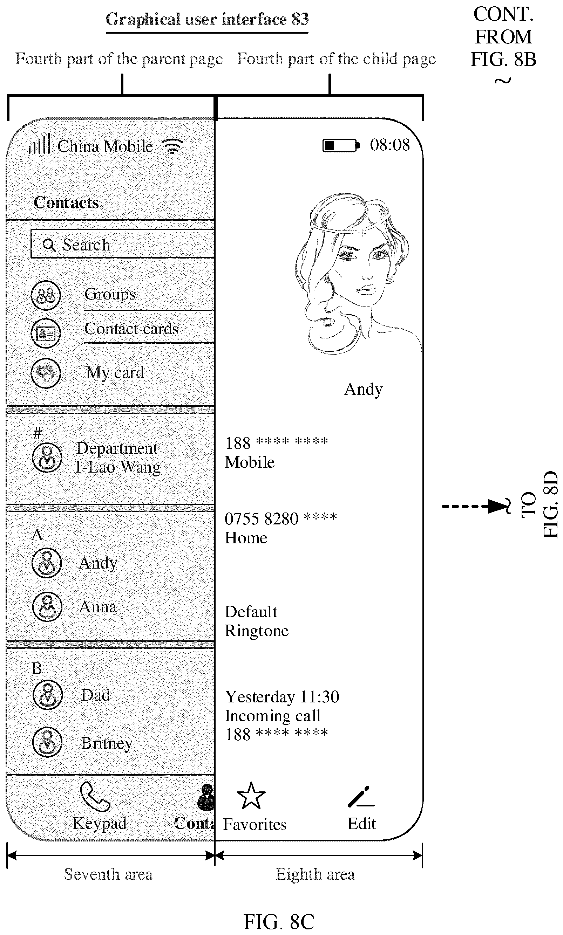

FIG. 8B and FIG. 8C show user interfaces provided by the electronic device on the display at two different time points in a process of moving the child page from the left side to the right side of the display for display.

Refer to a user interface 82 shown in FIG. 8B. The electronic device may display a third part of the parent page in a fifth area of the display, and display a third part of the child page in a sixth area of the display. Herein, on the user interface 82 shown in FIG. 8B, it may be considered that the electronic device superimposes and displays the third part of the child page in the sixth area of the display.

In this embodiment of this application, the fifth area of the display is a left area of the display, and the sixth area of the display is a right area of the display. The fifth area and the sixth area do not overlap and are combined into a display area of the display. In a possible implementation, refer to FIG. 8B. The fifth area is a one-third part of the display, and the sixth area is a right two-thirds part of the display. In another possible implementation, the fifth area or the sixth area may not be a rectangular area, but may be implemented in another shape, for example, a fan shape, a semi circle shape, a semi elliptic shape, or another irregular shape. For example, the sixth area may alternatively be a fan-shaped area on the upper right of the display. A manner of determining locations of the fifth area and the sixth area in the display is the same as the manner of determining the locations of the first area and the second area in the display in the embodiment in FIG. 5B. For details, refer to related descriptions. Details are not described herein again.

In this embodiment of this application, the third part of the parent page is a part of the parent page that is displayed in the fifth area of the display. For example, refer to FIG. 8B. The third part of the parent page may be a left one-third part of the parent page.

In this embodiment of this application, the third part of the child page is any part of the child page. The third part of the child page may be referred to as a part of the child page. A height of the part of the child page is the same as a height of the child page, and a width of the part of the child page is less than a width of the child page. An area size of the part of the child page is not limited in this application. In some embodiments, the part of the child page may be a middle part of the child page. In a specific implementation, the part of the child page may be the middle part of the child page mentioned in the embodiment in FIG. 5A to FIG. 5D. For details, refer to related descriptions. In some other embodiments, the part of the child page may alternatively be a left part or a right part of the child page. For example, refer to FIG. 8B. The third part of the child page may be a middle two-thirds part of the child page. In addition to the middle two-thirds part of the child page, the third part of the child page may alternatively be a left two-thirds part, a right two-thirds part, or any other part of the child page. In some embodiments of this application, the third part of the child page may not be a rectangular area, but may be implemented in another shape, for example, a fan shape, a semi circle shape, a semi elliptic shape, or another irregular shape. For example, the third part of the child page may alternatively be a fan-shaped part on the upper right of the child page. A manner of determining the third part of the child page is the same as the manner of determining the first part of the child page in the embodiment in FIG. 5B. For details, refer to related descriptions. Details are not described herein again.

After displaying the user interface 82 shown in FIG. 8B for a period of time (for example, 200 milliseconds), the electronic device may display a user interface 83 shown in FIG. 8C on the display.

Refer to FIG. 8C. The electronic device may display a fourth part of the parent page in a seventh area of the display, and display a fourth part of the child page in an eighth area of the display. Herein, on the user interface 83 shown in FIG. 8C, it may be considered that the electronic device superimposes and displays the fourth part of the child page in the eighth area of the display.

In this embodiment of this application, the seventh area of the display is a left area of the display, and the seventh area includes the fifth area. The eighth area of the display is a right area of the display, and the eighth area belongs to the sixth area. The seventh area and the eighth area do not overlap and are combined into the display area of the display. For example, refer to FIG. 8C. The seventh area may be a left half of the display, and the eighth area may be a right half of the display. In some embodiments of this application, the seventh area or the eighth area may not be a rectangular area, but may be implemented in another shape, for example, a fan shape, a semi circle shape, a semi elliptic shape, or another irregular shape. For example, the eighth area may alternatively be a fan-shaped area on the upper right of the display.

In this embodiment of this application, the fourth part of the parent page is a part of the parent page that is displayed in the seventh area of the display. The fourth part of the parent page includes the third part of the parent page. For example, refer to FIG. 8C. The fourth part of the parent page may be a left half of the parent page.

In this embodiment of this application, the fourth part of the child page belongs to the third part of the child page. In some embodiments of this application, the fourth part of the child page may not be a rectangular area, but may be implemented in another shape, for example, a fan shape, a semi circle shape, a semi elliptic shape, or another irregular shape. For example, the fourth part of the child page may alternatively be a fan-shaped part on the upper right of the child page.

After displaying the user interface 83 shown in FIG. 8C for a period of time (for example, 200 milliseconds), the electronic device may display the user interface 84 shown in FIG. 8D on the display. For the user interface 84, refer to related descriptions in the foregoing embodiment. Details are not described herein again.

In some embodiments of this application, in the process of switching from the child page to the parent page, the electronic device may further prompt the user that the electronic device is currently switching from the child page to the parent page. The prompt manner may include: 1. In the process of switching from the child page to the parent page, the electronic device simultaneously displays the child page and the parent page in different display forms. The page display form may include a page background color, page transparency, a page border, or the like. For example, refer to FIG. 8B and FIG. 8C. When the electronic device simultaneously displays the child page and the parent page on the display, a background color of the parent page is light black, and a background color of the child page is white. 2. In the process in which the electronic device switches from the child page to the parent page, a background color of the parent page displayed on the display gradually becomes lighter, or transparency of the parent page becomes lower. 3. In the process in which the electronic device switches from the parent page to the child page, transparency of the child page displayed on the display becomes higher.

It can be understood that FIG. 8B and FIG. 8C show only the user interfaces provided by the electronic device on the display at the two different time points in the process of moving the child page from the left side to the right side of the display for display. In some embodiments of this application, at other time points during which the electronic device displays FIG. 8A and FIG. 8B, or FIG. 8B and FIG. 8C, or FIG. 8C and FIG. 8D, the electronic device may further provide other similar user interfaces on the display, which are not listed one by one herein.

It can be understood that, in the process of switching from the child page to the parent page provided in the embodiment in FIG. 8A to FIG. 8D, the electronic device may continuously display, on the provided user interfaces, system-level interface elements provided by an operating system, for example, the status bars in the user interfaces shown in FIG. 8A to FIG. 8D.

It can be learned from the embodiment in FIG. 8A to FIG. 8D that, when the electronic device displays the child page on the display in full screen, if the electronic device detects an operation used to switch from the child page to the parent page, in response to the operation, the electronic device may switch from displaying the child page in full screen to displaying the parent page on the display and superimposing and displaying the part of the child page on the first side of the display; and control the child page to gradually move toward the first side of the display and narrow a displayed part of the child page on the display, until the parent page is displayed on the display in full screen. The height of the part of the child page is the same as the height of the child page, and the width of the part of the child page is less than the width of the child page. The first side may be a direction in which the sixth area is located in the display, and the second side may be a direction in which the fifth area is located in the display. In some embodiments, the first side of the display may be a right side of the display, and the second side of the display may be a left side of the display.

In some embodiments, the electronic device may gradually narrow the displayed part of the child page on the display toward the first side and/or the second side. Specifically, the electronic device narrows the displayed part of the child page on the display by using the following several policies:
1. The electronic device narrows a displayed first side part of the child page on the display, or the electronic device narrows a displayed second side part of the child page on the display, until the child page is not displayed on the display and the parent page is displayed on the display in full screen.
2. The electronic device first narrows a displayed first side part of the child page on the display, and then narrows a displayed second side part of the child page on the display, until the child page is not displayed on the display and the parent page is displayed on the display in full screen.
3. The electronic device first narrows a displayed second side part of the child page on the display, and then narrows a displayed first side part of the child page on the display, until the child page is not displayed on the display and the parent page is displayed on the display in full screen.
4. The electronic device simultaneously narrows a displayed first side part of the child page and a displayed second side part of the child page on the display, until the child page is not displayed on the display and the parent page is displayed on the display in full screen.

Herein, a height of the first side part of the child page is the same as the height of the child page, and a width of the first side part of the child page is less than the width of the child page. A height of the second side part of the child page is the same as the height of the child page, and a width of the first side part of the child page is less than the width of the child page.

According to the embodiment in FIG. 8A to FIG. 8D, the user may see that an area occupied by the parent page on the display gradually expands from the left side to the right side of the display and an area occupied by the child page on the display gradually narrows toward the right side of the display, until the parent page is displayed on the display in full screen. This manner provided by the electronic device to switch from a child page to a parent page meets a user expectation, provides a natural visual effect, achieves a relatively short user's visual movement line, and provides optimal use experience for the user.

In this embodiment of this application, the user operation used to switch from the child page to the parent page is not limited to the operation received by the electronic device on the back button 513 in the user interface 81 in the embodiment in FIG. 8A to FIG. 8D, and may alternatively be another user operation. For example, the user operation used to switch from the child page to the parent page may alternatively be a left-to-right slide gesture made by the user on the user interface 81. The slide gesture may start from a left edge area of the user interface 81, or may start from any middle area of the user interface 81. This is not limited in this embodiment of this application.

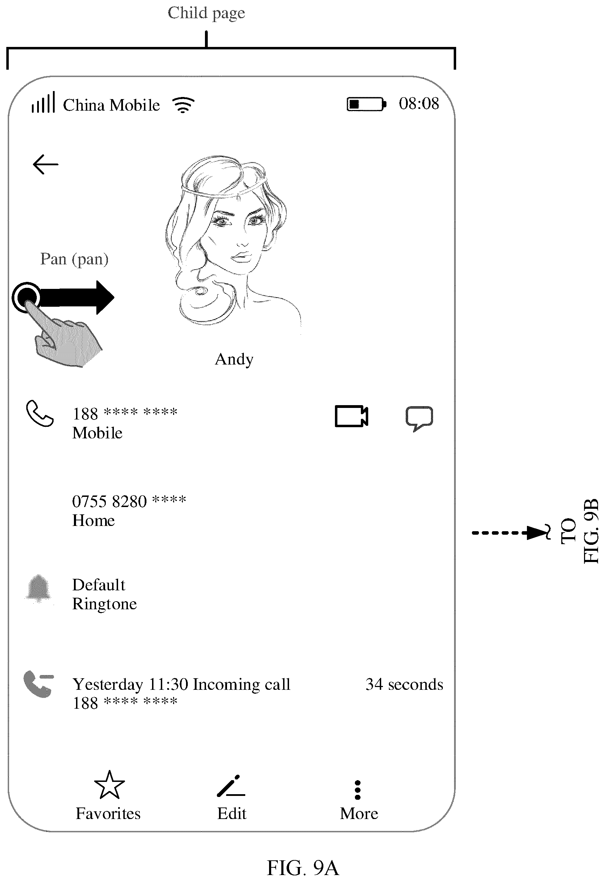

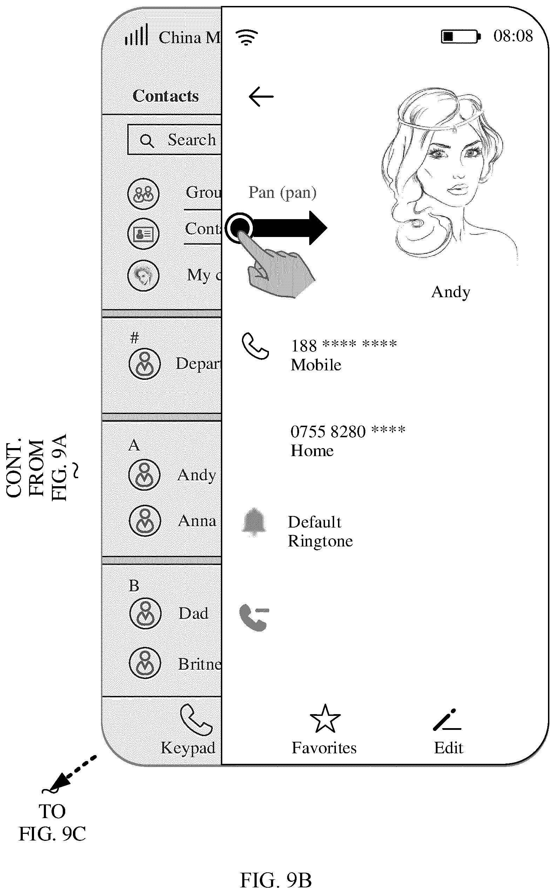

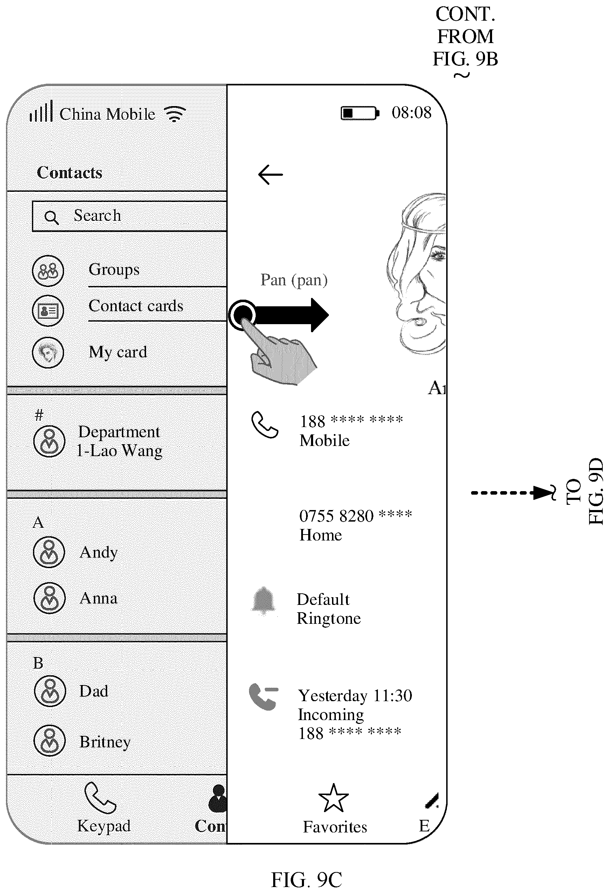

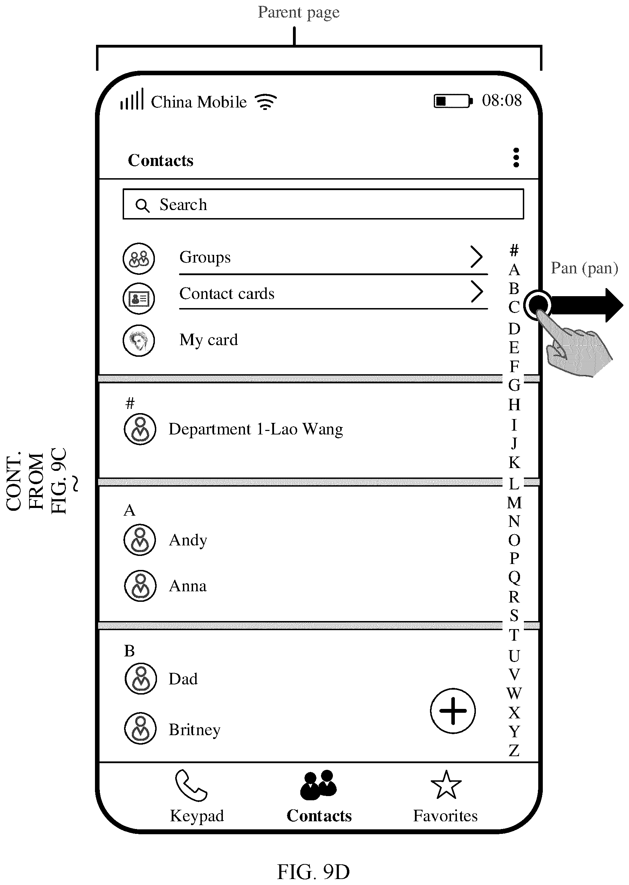

FIG. 9A to FIG. 9D are a schematic diagram in which the user enters a left-to-right pan (pan) gesture on the child page to enable the electronic device to switch from the child page to the parent page. A pan (pan) gesture is a gesture that a hand (for example, a finger) of the user slowly slides on the display. In some embodiments, the pan (pan) gesture may also be referred to as a follow-hand slide gesture. Duration of the pan (pan) gesture is greater than preset duration. A length of a sliding track of the pan (pan) gesture is greater than a preset length. The preset length may be preset. For example, the preset length may be a half of a width of the display.

According to the invention, as shown in FIG. 9A to FIG. 9D, the sliding track of the pan (pan) gesture may start from the left edge of the display and end at the right edge of the display. With the pan (pan) gesture entered by the user, the child page displayed by the electronic device on the display starts to translate rightward with the hand of the user, until the child page is not displayed on the display and the parent page is displayed in full screen. A speed at which the child page translates rightward with the hand of the user is the same as a speed at which the hand of the user slides on the display.

According to the invention, the sliding track of the pan (pan) gesture may start from the left edge of the display and end at a right half area of the display. With the pan (pan) gesture entered by the user, the child page displayed by the electronic device on the display starts to move rightward with the hand of the user, and a movement speed of the child page is the same as a movement speed of the pan (pan) gesture. After the user stops entering the pan (pan) gesture, the child page may translate rightward at a preset speed, until the child page is not displayed on the display and the parent page is displayed in full screen.

In the embodiment in FIG. 9A to FIG. 9D, in a process of displaying the child page as the hand of the user moves rightward, the electronic device gradually stops displaying a right area of the child page, and the right area of the child page that stops being displayed gradually becomes larger.

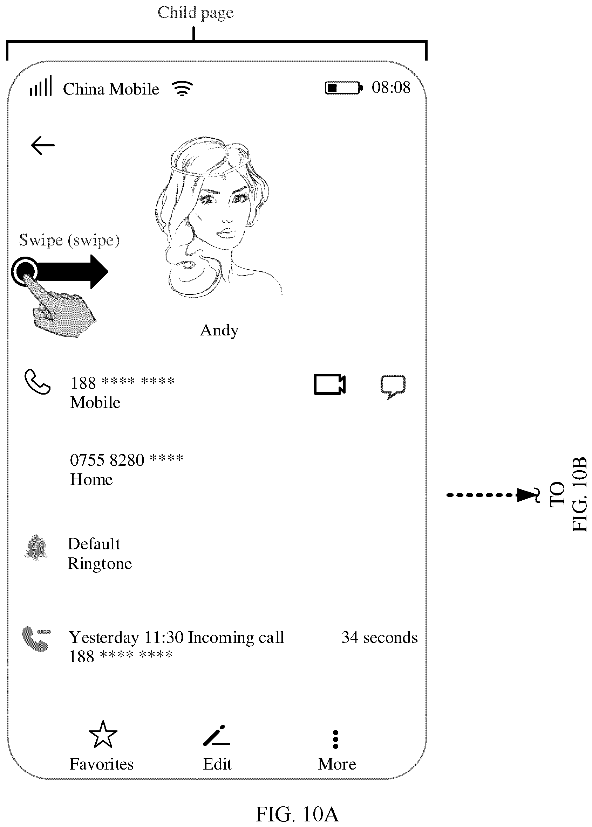

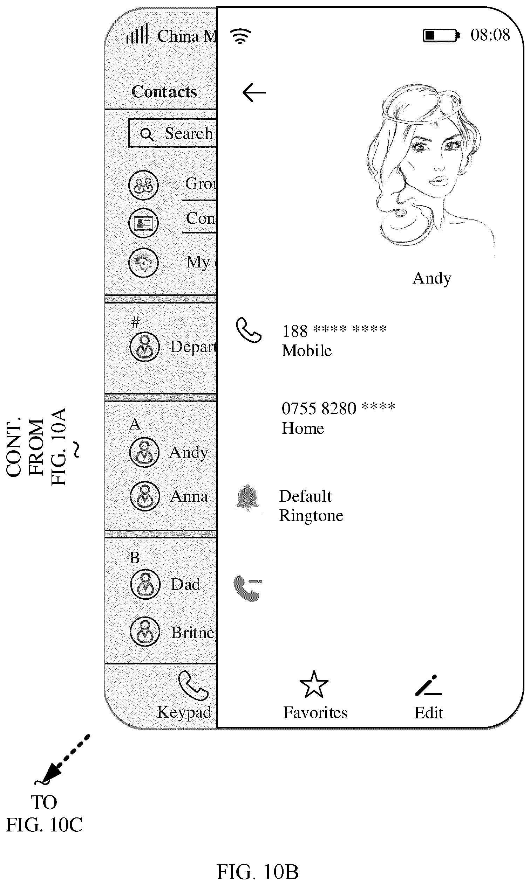

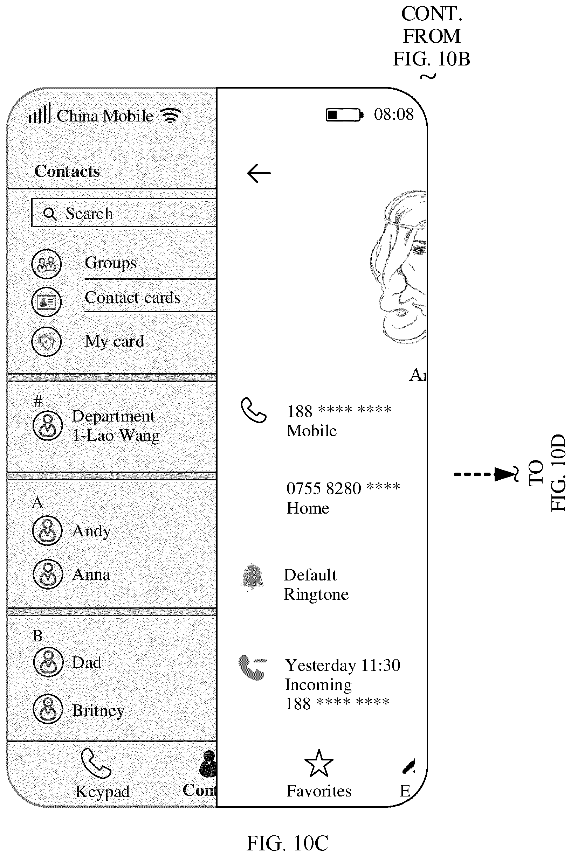

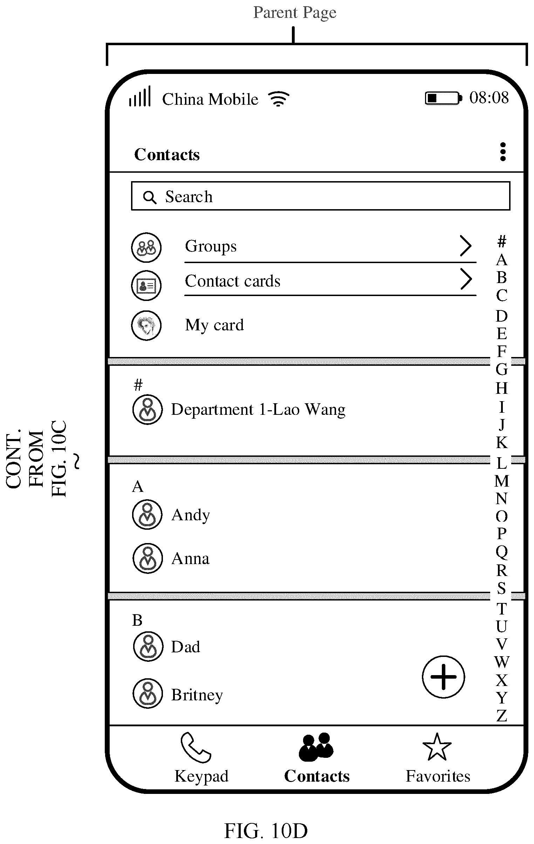

FIG. 10A to FIG. 10D are a schematic diagram in which the user enters a left-to-right swipe (swipe) gesture on the child page to enable the electronic device to switch from the child page to the parent page. A swipe (swipe) gesture is a gesture that the hand (for example, the finger) of the user quickly slides on the display. A movement track of the swipe (swipe) gesture may be an arc or a straight line, or may not be a standard arc or a straight line but may be similar to an arc or a straight line. Duration of the swipe (swipe) gesture is shorter than the duration of the pan (pan) gesture. A start location and an end location of the sliding track of the swipe (swipe) gesture are not specifically limited in this embodiment of this application. In response to the swipe (swipe) gesture entered by the user, the child page displayed by the electronic device on the display translates from a left side to a right side of the display, until the child page is not displayed on the display and the parent page is displayed in full screen. For a translation manner of the child page, refer to FIG. 10B to FIG. 10D. A translation speed of the child page may be the same as that of the child page in the embodiment in FIG. 8A to FIG. 8D, or may be faster than that of the child page in the embodiment in FIG. 8A to FIG. 8D. This is not limited in this embodiment of this application.

It can be learned from the embodiment in FIG. 9A to FIG. 9D and the embodiment in FIG. 10A to FIG. 10D that, when the electronic device displays the child page on the display in full screen, if the electronic device detects a user operation (for example, a pan (pan) gesture or a swipe (swipe) gesture) used to switch from the parent page to the child page, in response to the operation, the electronic device may switch from displaying the child page in full screen to displaying the parent page on the display and superimposing and displaying a left part of the child page on a first side of the display, where a height of the left part of the child page is the same as a height of the child page, and a width of the left part of the child page is less than a width of the child page; and control the child page to gradually move toward the first side of the display and narrow a displayed part of the child page on the display, until the parent page is displayed on the display in full screen. An area size of the left part of the child page is not limited in this application. In some embodiments, the left part of the child page includes a left edge of the child page. Herein, in some embodiments, the electronic device may gradually narrow the displayed part of the child page on the display toward the first side and/or the second side.

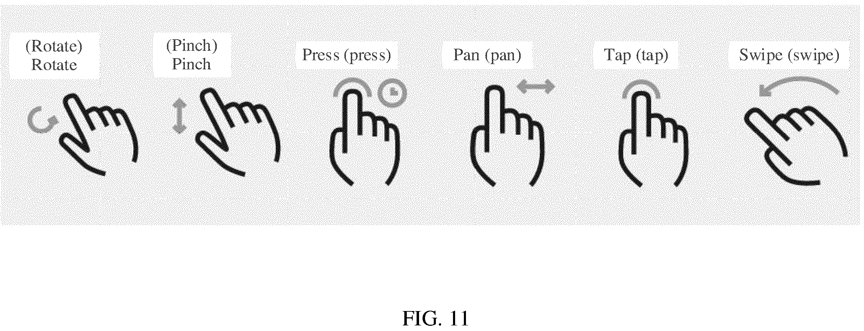

To more clearly explain the pan (pan) gesture and the swipe (swipe) gesture in the embodiments of this application, FIG. 11 shows several common gestures.

A rotate (rotate) gesture is a gesture that the hand (for example, the finger) of the user draws a circle in a clockwise or counterclockwise direction on the display. It can be understood that the circle may not be a standard circle, but may be similar to a circle.

A pinch (pinch) gesture is a gesture that the user uses two fingers to slide inward or outward. When a straight-line distance between the two fingers gradually decreases, it may be considered that the user uses the two fingers to slide inward; or when a straight-line distance between the two fingers gradually increases, it may be considered that the user uses the two fingers to slide outward.

A press (press) gesture is a press operation whose intensity performed by the hand (for example, the finger) of the user on the display is greater than preset intensity. The press (press) gesture may include a long press (long press) gesture. When the long press gesture is executed, a time in which the hand of the user is in contact with the screen exceeds preset duration.

A tap (tap) gesture is a tap, tap, or touch operation performed by the hand (for example, the finger) of the user on the display. A time between a start and an end of the tap (tap) gesture is within preset duration, and the preset duration is in a unit of millisecond. In other words, when the tap (tap) gesture is executed, a time in which the hand of the user is in contact with the screen is within the preset duration.

In this embodiment of this application, in the process in which the electronic device switches from the child page to the parent page, the displayed part of the child page moved on the display is implemented by using a mask (mask). A child page and a mask layer constitute a mask (mask), and the child page is a masked layer. A part in which the child page (the masked layer) and the mask layer overlap and that is located in the display is a part of the child page that is displayed by the electronic device on the display. For the process in which the electronic device switches from the child page to the parent page, refer to related descriptions in the embodiment in FIG. 8A to FIG. 8D, the embodiment in FIG. 9A to FIG. 9D, or the embodiment in FIG. 10A to FIG. 10D.

Compared with a process in which the electronic device implements switching from a parent page to a child page by using a mask (mask), a process in which the electronic device implements switching from a child page to a parent page by using a mask (mask) has opposite movement directions of the child page (the masked layer) and the mask layer. Details are described below.

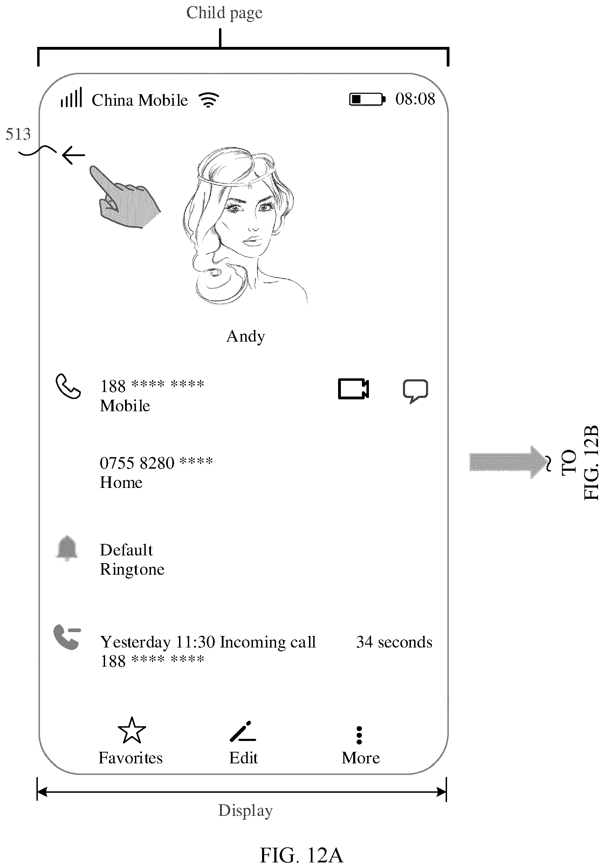

FIG. 12A to FIG. 12D show an example of a manner in which an electronic device displays, in a process of switching from a child page to a parent page, a part of or the entire child page by using a mask (mask). In the embodiment in FIG. 12A to FIG. 12D, both the parent page and the child page are provided by an application "Contacts (Contacts)". The parent page is a user interface used to display one or more contact entries, and the child page is a page used to display address book details of a specific contact (for example, a contact "Andy").

FIG. 12A shows a user interface displayed by the electronic device on the display in full screen. The user interface includes a status bar and a page (that is, a child page) used to display address book details of a specific contact (for example, the contact "Andy"). For the user interface shown in FIG. 12A, refer to related descriptions of the user interface 54 in FIG. 5D. Details are not described herein again.

In some embodiments, in response to a detected user operation used to switch from a child page to a parent page, the electronic device may generate or open a parent page corresponding to the child page, and generate a mask layer. The mask layer and the child page constitute a mask (mask). Herein, the user operation used to switch from the child page to the parent page may include a user operation (for example, a touch operation) performed on the back button 513 on the child page, a left-to-right pan (pan) gesture or a left-to-right swipe (swipe) gesture performed on the child page.

In some other embodiments, the child page shown in FIG. 12A is switched in the manner shown in FIG. 6A to FIG. 6D. To be specific, when the electronic device displays the user interface shown in FIG. 12A, the parent page, the mask layer, and the masked layer (the child page) have been generated, and locations of the parent page, the mask layer, and the masked layer (the child page) are the same as those in FIG. 6D. When the electronic device displays the user interface shown in FIG. 12A, the mask layer and the masked layer (the child page) in the mask (mask) may be generated when the electronic device detects the user operation used to switch from the parent page to the child page in the embodiment in FIG. 6B.

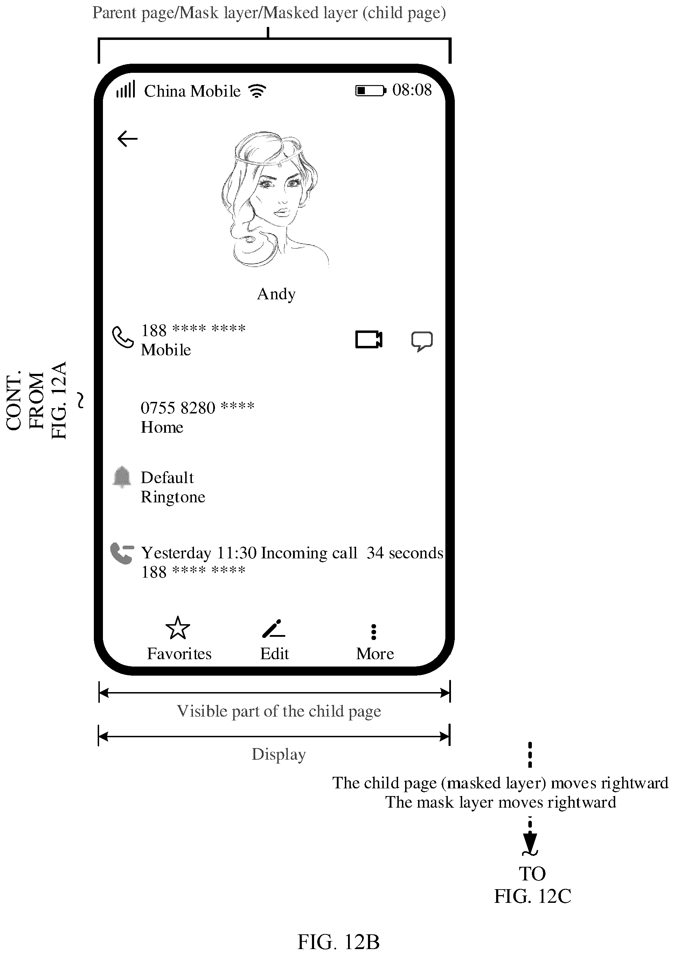

FIG. 12B shows an example of a parent page and a mask layer that are generated by the electronic device. As shown in FIG. 12B, both the parent page and the mask layer that are generated by the electronic device are located in the display and occupy the entire display area of the display. A size of the parent page and a size of the mask layer are basically the same as a size of the display. Content of the child page (the masked layer) and content of the mask layer all overlap and are located in the display. In this case, all of the content of the child page (the masked layer) may be displayed on the display. Because the parent page is entirely covered by the overlapped part between the child page (the masked layer) and the mask layer, the parent page is not displayed on the display. In other words, when the electronic device generates the parent page and the mask layer shown in FIG. 12B, the electronic device still displays the child page on the display in full screen.

After generating the parent page and the mask layer in response to the detected user operation used to switch from the child page to the parent page, or in response to the detected user operation used to switch from the child page to the parent page, the electronic device may control the child page (the masked layer) and the mask layer to move from the left side to the right side of the display. The parent page remains stationary while the child page (the masked layer) and the mask layer move from the left side to the right side of the display. A movement speed of the child page (the masked layer) may be the same as or different from a movement speed of the mask layer. This is not limited in this application. The child page (the masked layer) and the mask layer may perform acceleration movement, uniform movement, or deceleration movement. The acceleration movement or the deceleration movement may make the process of switching from the child page to the parent page more meet a user expectation. The movement speed of the child page (the masked layer) and the movement speed of the mask layer each are greater than or equal to 0. The child page (the masked layer) and the mask layer may simultaneously or not simultaneously move. This is not limited in this application.

In this embodiment of this application, in a process in which the electronic device controls the child page (the masked layer) and the mask layer to move, a part in which the child page (the masked layer) and the mask layer overlap is located in the display, so that the user can see that the child page moves from left to right of the display.

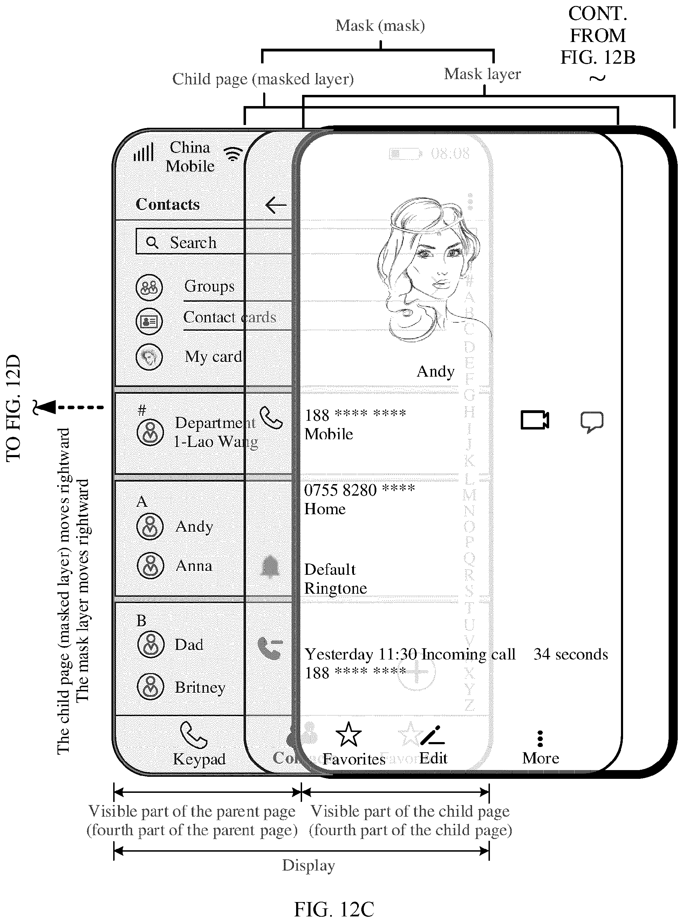

FIG. 12C shows an example of locations of the child page (the masked layer) and the mask layer after the child page (the masked layer) and the mask layer move for a period of time. In a process in which the child page (the masked layer) and the mask layer move in FIG. 12B and FIG. 12C, the movement speed of the mask layer is greater than the movement speed of the child page (the masked layer). As shown in FIG. 12C, a part of content of the child page (the masked layer) is located in a right area in the display, and the other part of content is located in a right area outside the display; and a part of content of the mask layer is located in a right area in the display, and the other part of content is located in a right area outside the display. The content of the child page (the masked layer) and the content of the mask layer partially overlap and are located in the display. The partial content may be displayed on the display. The partial content is a visible part of the child page shown in FIG. 12C. Content that is in the parent page and that does not overlap the visible part may also be displayed on the display. In other words, when the child page (the masked layer) and the mask layer move to locations shown in FIG. 12C, the electronic device simultaneously displays the parent page and the child page on the display.

For example, refer to FIG. 8C. When the child page (the masked layer) and the mask layer move to the locations shown in FIG. 12C, the electronic device may display the user interface 83 shown in FIG. 8C, to be specific, the electronic device may display the fourth part of the parent page in the seventh area of the display, and display the fourth part of the child page in the eighth area of the display. Herein, for the fourth part of the parent page and the fourth part of the child page, refer to related descriptions in the foregoing embodiment.

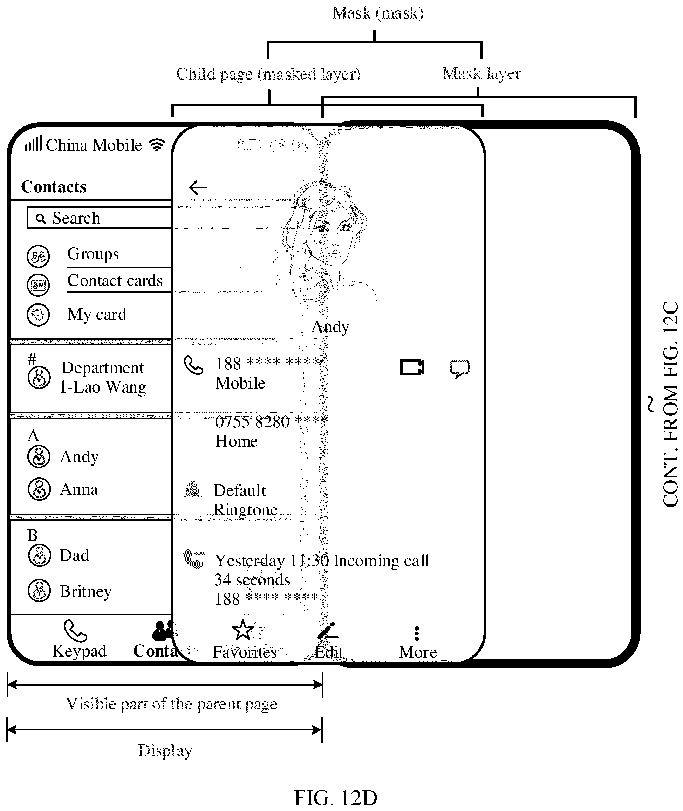

FIG. 12D shows an example of a user interface displayed on the display after movement from the left edge of the mask layer to the right edge of the display. As shown in FIG. 12D, during the movement from the left edge of the mask layer to the right edge of the display, the content of the child page (the masked layer) and the content of the mask layer partially overlap, and the overlapped content is located in a right area outside the display. Because the overlapped content between the child page (the masked layer) and the mask layer in the mask (mask) generated by the electronic device is located outside the display, the parent page is displayed on the display in full screen.

For example, refer to FIG. 8D. When the child page (the masked layer) and the mask layer move to the locations shown in FIG. 12D, the electronic device may display the user interface 84 shown in FIG. 8D, to be specific, the electronic device displays the parent page on the display in full screen.

It can be understood that FIG. 12A to FIG. 12D show only an example of the child page (the masked layer) and the mask layer that are generated by the electronic device, the movement directions thereof, the movement speeds thereof, and the like. There may be different child pages (masked layers), mask layers, movement directions thereof, movement speeds thereof, and the like during actual application. This should not constitute a limitation.

The locations of the child page (the masked layer) and the mask layer shown in FIG. 12A to FIG. 12D are not limited. In some embodiments, when the electronic device generates the parent page and the mask layer, the child page (the masked layer) and the mask layer may alternatively be at other locations. For example, a part of the child page (the masked layer) may be alternatively located in the display, and the other part is located in a right area outside the display; and a part of the mask layer may be alternatively located in the display, and the other part is located in a right area outside the display.

The movement directions and movement routes of the child page (the masked layer) and the mask layer shown in FIG. 12A to FIG. 12D are not limited. In some embodiments, the electronic device may alternatively control the child page (the masked layer) and the mask layer to move in another direction, for example, a direction from a lower left corner to an upper right corner of the display, or may control the child page (the masked layer) and the mask layer to move along another route, for example, a curve.

In this embodiment of this application, after the electronic device generates the parent page and the mask layer, the movement speeds of the child page (the masked layer) and the mask layer may be preset based on user experience.

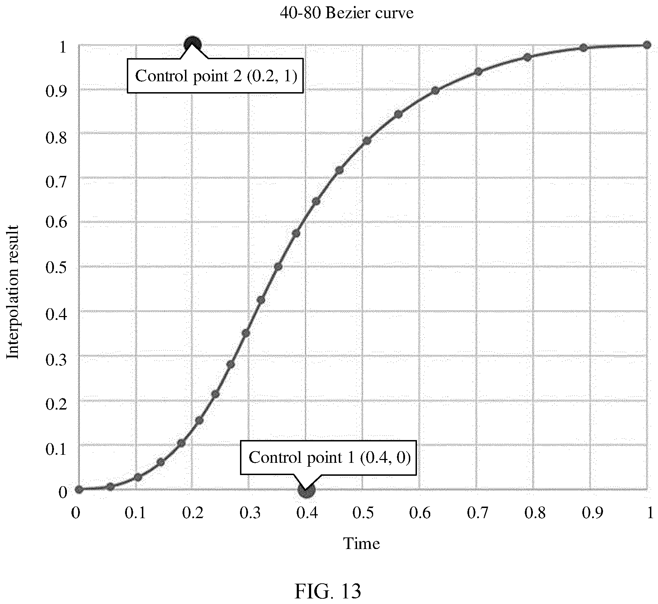

For example, FIG. 13 shows a possible Bezier curve. The Bezier curve may reflect a movement speed or a movement rhythm of the child page (the masked layer) or the mask layer in a case in which the electronic device generates the parent page and the mask layer at the locations shown in FIG. 12B and then the child page (the masked layer) and the mask layer simultaneously move.

As shown in FIG. 13, the Bezier curve is determined by four values 0.4, 0, 0.2, and 1 of a start point (a control point 1) and an end point (a control point 2). A vertical coordinate of the Bezier curve is an interpolation result, and a horizontal coordinate is a ratio of a current time point to entire animation duration (that is, duration of switching from a child page to a parent page). For example, when the horizontal coordinate is 0, it may indicate a moment at which the electronic device receives a user operation used to switch from the child page to the parent page (for example, a moment at which the electronic device receives the tap operation on the back button 513 on the user interface 81 shown in FIG. 8A); and when the horizontal coordinate is 0.5, it may indicate an intermediate time point in a process in which the electronic device switches from the child page to the parent page. A slope of the Bezier curve may be used to represent the movement speed of the child page (the masked layer) and/or the mask layer.

In some embodiments of this application, compared with the process of switching from a child page to a parent page, the process of switching from a parent page to a child page may have different movement speeds of the child page (the masked layer) and the mask layer. For example, if the child page (the masked layer) and the mask layer perform acceleration movement in the process of switching from the parent page to the child page, and the child page (the masked layer) and the mask layer perform acceleration movement in the process of switching from the child page to the parent page, the two processes may correspond to different accelerations. Different accelerations more meet a user expectation.

It can be learned from FIG. 12A to FIG. 12D that, in this embodiment of this application, the part of the child page that is displayed on the display in the process of switching from the child page to the parent page is implemented by using the mask (mask). After the user triggers the electronic device to switch from the child page to the parent page, the electronic device generates the mask layer and the masked layer (the child page). As the mask layer and the masked layer (the child page) move from left to right, the user may see, on the display, that an area occupied by the child page on the display gradually narrows from the left side to the right side of the display and an area occupied by the parent page on the display gradually expands toward the right side of the display, until the parent page is displayed on the display in full screen. Such a manner of switching from a child page to a parent page can provide a better visual effect for the user and improve user experience.

In some other embodiments of this application, in addition to the fact that switching from a child page to a parent page is completed by performing the process in which a part of a child page that is displayed by the electronic device on the display is implemented by using a mask (mask) in the embodiment in FIG. 12A to FIG. 12D, switching from a child page to a parent page may also be completed by performing a process in which a part of a parent page that is displayed by the electronic device on the display is implemented by using a mask (mask) in this application. A specific implementation is described in detail below.

First, the electronic device displays the child page.

Then, when detecting an operation used to switch from the child page to the parent page, the electronic device generates the parent page and the mask layer. Herein, the parent page and the mask layer constitute a mask (mask) and the parent page is a masked layer. This is different from a case in which the child page and the mask layer constitute the mask (mask) in the embodiment in FIG. 12A to FIG. 12D. A part in which the parent page (the masked layer) and the mask layer overlap and that is located in the display is a part of the parent page that is displayed by the electronic device on the display.

Next, the electronic device controls the parent page (the masked layer) and the mask layer to move from the left side to the right side of the display. In the movement process, the part in which the parent page (the masked layer) and the mask layer overlap is located in the display, so that the user can see that the parent page translates from left to right on the display.

Finally, content of the parent page (the masked layer) and content of the mask layer all overlap and are located in the display. In this case, all of the content of the parent page (the masked layer) may be displayed on the display.

It can be understood that, compared with a process in which a part of a child page that is displayed by the electronic device on the display is implemented by using a mask (mask), a process in which a part of a parent page that is displayed by the electronic device on the display is implemented by using a mask (mask) has a symmetrical or mirrored location, movement direction, movement speed, or the like of the mask (mask). A person skilled in the art may clearly determine, based on related descriptions in the embodiment in FIG. 12A to FIG. 12D, a specific operation used to complete switching from a child page to a parent page by performing a process in which a parent page displayed by the electronic device on the display is implemented by using a mask (mask). Details are not described herein again.

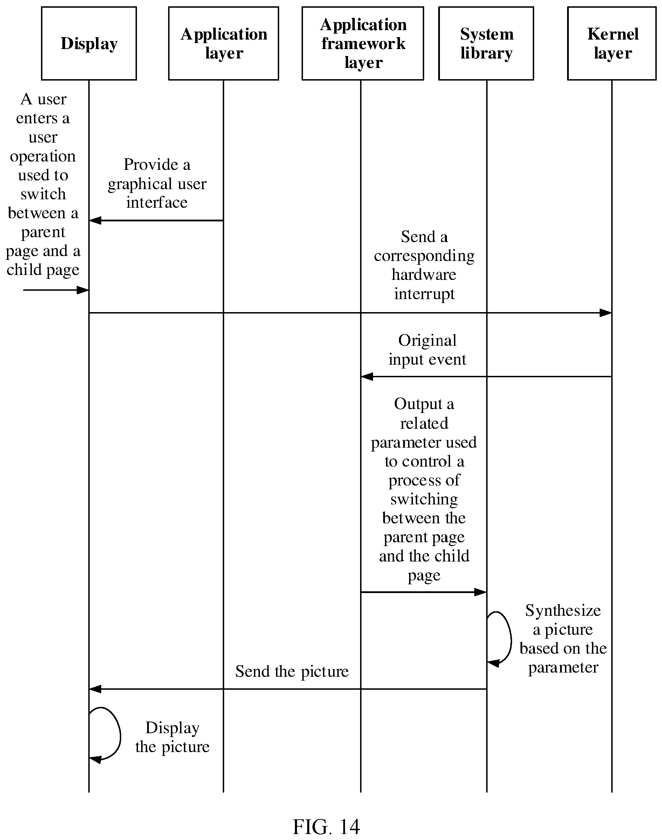

The following describes a method for switching between a parent page and a child page according to an embodiment of this application with reference to the software structure of the electronic device shown in FIG. 3B. FIG. 14 is a schematic flowchart of interaction between each software module and each hardware module when an electronic device switches between a parent page and a child page.

The application layer includes a series of applications, and the electronic device may run one or more of the applications at the application layer. An application currently running on the electronic device includes an application that occupies a focus of a display to provide a graphical user interface for a user.

When the user enters, on a graphical user interface currently provided by the electronic device, a user operation used to switch between a parent page and a child page, the user operation may be detected by the display of the electronic device, and a corresponding hardware interrupt is sent to the kernel layer. The kernel layer processes the user operation used to switch between a parent page and a child page into an original input event, and stores the original input event. Herein, for the user operation used to switch between a parent page and a child page, refer to related descriptions in the foregoing embodiments. Details are not described herein again.

The application framework layer obtains the original input event from the kernel layer, and identifies a function (that is, switching between a parent page and a child page) of an operation corresponding to the original input event. An activity manager (ActivityManagerService, AMS) or a window manager (WindowManagerService, WMS) of the application framework layer reads a parameter related to a layer currently displayed on the display. For example, the related parameter may be used to describe a display area, transparency, and a background color of a currently displayed parent page/child page. The AMS or WMS of the application framework layer is further used to output a related parameter used to control a process of switching between the parent page and the child page. The related parameter used to control the parent page/child page switching process is used to describe a change of a display area, a change of transparency, a change of transparency, a movement speed, a movement direction, and the like of the parent page/child page in the process of switching between a parent page and a child page.

The surface manager (surface manager) of the system library synthesizes, based on the related parameter that is output by the application framework layer, a picture that is finally displayed on the display.

The electronic device invokes the display driver of the kernel layer, and displays, to the user through the display, the picture synthesized by the surface manager. Herein, for a picture displayed on the display, refer to related descriptions in the foregoing UI embodiments. Details are not described herein again.

It can be learned from the embodiments in FIG. 5A to FIG. 5D, FIG. 6A to FIG. 6D, FIG. 8A to FIG. 8D, FIG. 9A to FIG. 9D, FIG. 10A to FIG. 10D, and FIG. 12A to FIG. 12D that, when the electronic device switches from a parent page to a child page or switches from a child page to a parent page, the child page moves on the display until the child page or the parent page is displayed on the display in full screen. Such a switching manner can shorten a user's visual movement line, provide a better visual effect, and improve user experience.

In addition to the foregoing scenario of switching between a parent page and a child page, the method for switching between pages provided in this application may be further applied to another scenario, for example, a scenario of switching between pages at a same level, or a scenario of switching between a home screen (Home screen) and an application home page.

The pages at a same level are pages provided by a same application and that do not need to be switched through a back button, for example, pages respectively corresponding to four tabs (tabs), namely, "Chats", "Contacts", "Discover", and "Me", that are provided by "WeChat (WeChat)", or a dialer screen, a contact home page, and a page of Favorites respectively corresponding to three controls 510A to 510C that are provided by "Contacts (Contacts)". In this application, when detecting a user operation used to switch between pages at a same level, the electronic device may also switch between the pages at the same level by using a method similar to the method for switching between a parent page and a child page described in the foregoing embodiments, so that the user can see that a page at the same level moves on the display, until another page at the same level is displayed on the display in full screen. This completes switching between pages at a same level. Such a manner of switching between pages at a same level can shorten a user's visual movement line, provide a better visual effect, and improve user experience.

A home screen (Home screen) may be a home screen provided by the electronic device. An example implementation of the home screen may be the user interface 41 shown in FIG. 4. An application home page is a user interface displayed on the display when the electronic device opens an application for the first time. A person skilled in the art may understand that a logical home page of an application is fixed, and is determined during application design. In this application, when detecting a user operation used to switch between a home screen and an application home page, the electronic device may also switch between the home screen and the application home page by using a method similar to the method for switching between a parent page and a child page described in the foregoing embodiments. Such a manner of switching between a home screen and an application home page can shorten a user's visual movement line, provide a better visual effect, and improve user experience.

The implementations of this application may be randomly combined to achieve different technical effects.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, the procedures or functions according to this application are all or partially generated. The computer may be a general-purpose computer, a special-purpose computer, a computer network, or another programmable apparatus. The computer instructions may be stored in the computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

## Claims

1. A method for switching between a parent page and a child page, comprising:
displaying, by an electronic device (100) on a display (194) in full screen, a parent page provided by an application, wherein the application further provides a child page, the parent page is an upper-level page of the child page, and sizes of the parent page and the child page are the same; and
detecting, by the electronic device, an operation by a user used to switch from the parent page to the child page, and in response to the operation used to switch from the parent page to the child page, automatically performing, by the electronic device, the following steps:
switching from displaying the parent page in full screen to superimposing and displaying a middle part of the child page on a first side of the display, wherein a height of the middle part of the child page is the same as a height of the child page, and a width of the middle part of the child page is less than a width of the child page; and
controlling the child page to gradually move toward a second side of the display and gradually expanding the displayed part of the child page on the display, until the child page is displayed on the display in full screen, wherein the second side is opposite to the first side;
wherein in response to the operation used to switch from the parent page to the child page, the method further comprises:
automatically performing, by the electronic device, the following steps:
generating a mask, wherein the mask comprises a mask layer and the child page; and
controlling the mask layer and the child page to move toward the second side of the display at different preset speeds and wherein the parent page remains stationary while the child page and the mask layer move, wherein a part in which the child page and the mask layer overlap and that is located in the display is the displayed part of the child page on the display;
displaying the child page on the display in full screen after both the child page and the mask layer stop moving and all of the content of the child page is covered by the mask layer, and after the child page is displayed in full screen maintaining the generated mask comprising the mask layer and the child page;
wherein after the child page is displayed on the display in full screen, the method further comprises:
detecting, by the electronic device, an operation used to switch from the child page to the parent page, wherein the operation is a sliding operation of the user's hand on the display, and in response to the operation used to switch from the child page to the parent page, automatically performing, by the electronic device, the following steps:
switching from displaying the child page in full screen to displaying the parent page on the display, and superimposing and displaying a part of the child page on the first side of the display, wherein a height of the part of the child page is the same as the height of the child page, and a width of the part of the child page is less than the width of the child page; and
controlling the child page to gradually move toward the first side of the display and gradually narrowing the displayed part of the child page on the display, until the parent page is displayed on the display in full screen, and wherein a speed at which the child page starts to move towards the first side of the display is the same as a speed of the sliding operation of the user's hand on the display;
wherein in response to the operation used to switch from the child page to the parent page, the method further comprises:
automatically performing, by the electronic device, the following steps:
controlling the mask layer and the child page to move toward the first side of the display, wherein
the part in which the child page and the mask layer overlap and that is located in the display is a displayed part of the child page on the display.

2. The method according to claim 1, wherein the first side of the display is a right side of the display, and the second side of the display is a left side of the display.

3. The method according to claim 1 or 2, wherein the gradually expanding the displayed part of the child page on the display specifically comprises:
gradually expanding the displayed part of the child page on the display toward the first side and the second side.

4. The method according to any one of claims 1 to 3, wherein after the electronic device detects the operation used to switch from the parent page to the child page, and before the child page is displayed on the display in full screen, the parent page and the child page are displayed on the display in different forms, wherein the display form comprises one or more of a background color, transparency, or a border.

5. The method according to any one of claims 1 to 4, wherein
in a process of controlling the child page to gradually move toward the second side of the display, a background color of the parent page displayed on the display gradually becomes darker, or transparency of the parent page displayed on the display gradually becomes higher.

6. The method according to any of claims 1-5, wherein
a process in which the mask layer and the child page move toward the second side of the display is a deceleration movement process.

7. The method according to any of claims 1-6, wherein the gradually narrowing the displayed part of the child page on the display specifically comprises:
gradually narrowing the displayed part of the child page on the display toward the first side and/or the second side.

8. The method according to any one of claims 1 to 7, wherein after the electronic device detects the operation used to switch from the child page to the parent page, and before the parent page is displayed on the display in full screen, the parent page and the child page are displayed on the display in different forms, wherein the display form comprises one or more of a background color, transparency, or a border.

9. The method according to any one of claims 1 to 8, wherein
in a process in which the child page gradually moves toward the first side of the display, the background color of the parent page displayed on the display gradually becomes lighter, or the transparency of the parent page displayed on the display gradually becomes lower.

10. The method according to any of claims 1-9, wherein
a process in which the mask layer and the child page move toward the first side of the display is a deceleration movement process.

11. The method according to any one of claims 1 to 10, wherein
the parent page is a user interface provided by an application Contacts to display one or more pieces of contact information stored in the electronic device, and the child page is a user interface provided by the application Contacts to display address book details of a first contact.

12. An electronic device, comprising one or more processors, a memory, and a display, wherein
the memory and the display are coupled to the one or more processors, the memory is configured to store computer program code, the computer program code comprises computer instructions, and the one or more processors invoke the computer instructions to enable the electronic device to perform the steps of claims 1-11.

## Patentansprüche

1. Verfahren zum Umschalten zwischen einer übergeordneten Seite und einer untergeordneten Seite, umfassend:
Anzeigen einer durch eine Anwendung bereitgestellten übergeordneten Seite durch eine elektronische Vorrichtung (100) auf einer Anzeige (194) im Vollbildmodus, wobei die Anwendung ferner eine untergeordnete Seite bereitstellt, die übergeordnete Seite eine Seite auf höherer Ebene der untergeordneten Seite ist und die Größen der übergeordneten Seite und der untergeordneten Seite dieselben sind; und
Detektieren eines Vorgangs durch einen Benutzer, der verwendet wird, um von der übergeordneten Seite auf die untergeordnete Seite umzuschalten, durch die elektronische Vorrichtung, und als Reaktion auf den Vorgang, der verwendet wird, um von der übergeordneten Seite auf die untergeordnete Seite umzuschalten, automatisches Durchführen der folgenden Schritte durch die elektronische Vorrichtung:
Umschalten vom Anzeigen der übergeordneten Seite im Vollbildmodus zum Überlagern und Anzeigen eines mittleren Teils der untergeordneten Seite auf einer ersten Seite der Anzeige, wobei eine Höhe des mittleren Teils der untergeordneten Seite dieselbe wie eine Höhe der untergeordneten Seite ist und eine Breite des mittleren Teils der untergeordneten Seite geringer als eine Breite der untergeordneten Seite ist; und
Steuern der untergeordneten Seite zum graduellen Bewegen in Richtung einer zweiten Seite der Anzeige und graduelles Erweitern des angezeigten Teils der untergeordneten Seite auf der Anzeige, bis die untergeordnete Seite auf der Anzeige im Vollbildmodus angezeigt wird, wobei die zweite Seite der ersten Seite gegenüberliegt;
wobei das Verfahren als Reaktion auf den Vorgang, der verwendet wird, um von der übergeordneten Seite auf die untergeordnete Seite umzuschalten, ferner Folgendes umfasst:
automatisches Durchführen der folgenden Schritte durch die elektronische Vorrichtung:
Generieren einer Maske, wobei die Maske eine Maskenebene und die untergeordnete Seite umfasst; und
Steuern der Maskenebene und der untergeordneten Seite zum Bewegen mit unterschiedlichen voreingestellten Geschwindigkeiten in Richtung der zweiten Seite der Anzeige, und wobei die übergeordnete Seite stationär bleibt, während sich die untergeordnete Seite und die Maskenebene bewegen, wobei ein Teil, in welchem sich die untergeordnete Seite und die Maskenebene überlappen und der sich in der Anzeige befindet, der angezeigte Teil der untergeordneten Seite auf der Anzeige ist;
Anzeigen der untergeordneten Seite auf dem Bildschirm im Vollbildmodus, nachdem sowohl die untergeordnete Seite als auch die Maskenebene aufgehört haben, sich zu bewegen, und der gesamte Inhalt der untergeordneten Seite durch die Maskenebene abdeckt ist, und nachdem die untergeordnete Seite im Vollbildmodus angezeigt wurde, Aufrechterhalten der generierten Maske, umfassend die Maskenebene und die untergeordnete Seite;
wobei das Verfahren, nachdem die untergeordnete Seite auf der Anzeige im Vollbildmodus angezeigt wurde, ferner Folgendes umfasst:
Detektieren eines Vorgangs, der verwendet wird, um von der untergeordneten Seite auf die übergeordnete Seite umzuschalten, durch die elektronische Vorrichtung, wobei der Vorgang ein Schiebevorgang der Hand des Benutzers auf der Anzeige ist, und als Reaktion auf den Vorgang, der verwendet wird, um von der untergeordneten Seite auf die übergeordnete Seite umzuschalten, automatisches Durchführen der folgenden Schritte durch die elektronische Vorrichtung:
Umschalten vom Anzeigen der untergeordneten Seite im Vollbildmodus zum Anzeigen der übergeordneten Seite auf der Anzeige und Überlagern und Anzeigen eines Teils der untergeordneten Seite auf der ersten Seite der Anzeige, wobei eine Höhe des Teils der untergeordneten Seite dieselbe wie die Höhe der untergeordneten Seite ist und eine Breite des Teils der untergeordneten Seite geringer als die Breite der untergeordneten Seite ist; und
Steuern der untergeordneten Seite zum graduellen Bewegen in Richtung der ersten Seite der Anzeige und graduelles Verengen des angezeigten Teils der untergeordneten Seite auf der Anzeige, bis die übergeordnete Seite auf der Anzeige im Vollbildmodus angezeigt wird, und wobei eine Geschwindigkeit, mit welcher die untergeordnete Seite beginnt, sich in Richtung der ersten Seite der Anzeige zu bewegen, dieselbe wie eine Geschwindigkeit des Schiebevorgangs der Hand des Benutzers auf der Anzeige ist;
wobei das Verfahren als Reaktion auf den Vorgang, der verwendet wird, um von der untergeordneten Seite auf die übergeordnete Seite umzuschalten, ferner Folgendes umfasst:
automatisches Durchführen der folgenden Schritte durch die elektronische Vorrichtung:
Steuern der Maskenebene und der untergeordneten Seite zum Bewegen in Richtung der ersten Seite der Anzeige, wobei
der Teil, in welchem sich die untergeordnete Seite und die Maskenebene überschneiden und der sich in der Anzeige befindet, angezeigter Teil der untergeordneten Seite auf der Anzeige ist.

2. Verfahren nach Anspruch 1, wobei die erste Seite der Anzeige eine rechte Seite der Anzeige ist und die zweite Seite der Anzeige eine linke Seite der Anzeige ist.

3. Verfahren nach Anspruch 1 oder 2, wobei das graduelle Erweitern des angezeigten Teils der untergeordneten Seite auf der Anzeige speziell Folgendes umfasst:
graduelles Erweitern des angezeigten Teils der untergeordneten Seite auf der Anzeige in Richtung der ersten Seite und der zweiten Seite.

4. Verfahren nach einem der Ansprüche 1 bis 3, wobei, nachdem die elektronische Vorrichtung den Vorgang detektiert, der zum Umschalten von der übergeordneten Seite auf die untergeordnete Seite verwendet wurde, und bevor die untergeordnete Seite auf der Anzeige im Vollbildmodus angezeigt wird, die übergeordnete Seite und die untergeordnete Seite auf der Anzeige in unterschiedlichen Formen angezeigt werden, wobei die Anzeigeform eine oder mehrere von einer Hintergrundfarbe, Transparenz oder einer Umrandung umfasst.

5. Verfahren nach einem der Ansprüche 1 bis 4, wobei
in einem Prozess des Steuerns der untergeordneten Seite zum graduellen Bewegen in Richtung der zweiten Seite der Anzeige eine Hintergrundfarbe der übergeordneten Seite, die auf der Anzeige angezeigt wird, graduell dunkler wird, oder die Transparenz der übergeordneten Seite, die auf der Anzeige angezeigt wird, graduell höher wird.

6. Verfahren nach einem der Ansprüche 1-5, wobei
ein Prozess, bei welchem sich die Maskenebene und die untergeordnete Seite in Richtung der zweiten Seite der Anzeige bewegen, ein Verzögerungsbewegungsprozess ist.

7. Verfahren nach einem der Ansprüche 1-6, wobei das graduelle Verengen des angezeigten Teils der untergeordneten Seite auf der Anzeige speziell Folgendes umfasst:
graduelles Verengen des angezeigten Teils der untergeordneten Seite auf der Anzeige in Richtung der ersten Seite und/oder der zweiten Seite.

8. Verfahren nach einem der Ansprüche 1 bis 7, wobei, nachdem die elektronische Vorrichtung den Vorgang detektiert, der zum Umschalten von der untergeordneten Seite auf die übergeordnete Seite verwendet wurde, und bevor die übergeordnete Seite auf der Anzeige im Vollbildmodus angezeigt wird, die übergeordnete Seite und die untergeordnete Seite auf der Anzeige in unterschiedlichen Formen angezeigt werden, wobei die Anzeigeform eine oder mehrere von einer Hintergrundfarbe, Transparenz oder einer Umrandung umfasst.

9. Verfahren nach einem der Ansprüche 1 bis 8, wobei
in einem Prozess, bei welchem sich die untergeordnete Seite graduell in Richtung der ersten Seite der Anzeige bewegt, die Hintergrundfarbe der übergeordneten Seite, die auf der Anzeige angezeigt wird, gradueller heller wird oder die Transparenz der übergeordneten Seite, die auf der Anzeige angezeigt wird, graduell geringer wird.

10. Verfahren nach einem der Ansprüche 1-9, wobei
ein Prozess, bei welchem sich die Maskenebene und die untergeordnete Seite in Richtung der ersten Seite der Anzeige bewegen, ein Verzögerungsbewegungsprozess ist.

11. Verfahren nach einem der Ansprüche 1 bis 10, wobei
die übergeordnete Seite eine Benutzerschnittstelle ist, die durch eine Anwendung Kontakte bereitgestellt wird, um eine oder mehrere Kontaktinformationen, die in der elektronischen Vorrichtung gespeichert sind, anzuzeigen, und die untergeordnete Seite eine Benutzerschnittstelle ist, die durch die Anwendung Kontakte bereitgestellt wird, um Adressbuchdetails eines ersten Kontakts anzuzeigen.

12. Elektronische Vorrichtung, umfassend einen oder mehrere Prozessoren, einen Speicher und eine Anzeige, wobei
der Speicher und die Anzeige an den einen oder die mehreren Prozessoren gekoppelt sind, der Speicher dazu konfiguriert ist, einen Computerprogrammcode zu speichern, der Computerprogrammcode Computeranweisungen umfasst, und der eine oder die mehreren Prozessoren die Computeranweisungen aufrufen, um die elektronische Vorrichtung in die Lage zu versetzen, die Schritte nach den Ansprüchen 1-11 durchzuführen.

## Revendications

1. Procédé de commutation entre une page parent et une page enfant, comprenant :
l'affichage, par un dispositif électronique (100) sur un écran (194) en plein écran, d'une page parent fournie par une application, dans lequel l'application fournit également une page enfant, la page parent est une page de niveau supérieur de la page enfant, et des tailles de la page parent et de la page enfant sont les mêmes ; et
la détection, par le dispositif électronique, d'une opération effectuée par un utilisateur, utilisée pour commuter de la page parent à la page enfant, et en réponse à l'opération utilisée pour commuter de la page parent à la page enfant, la réalisation automatique, par le dispositif électronique, des étapes suivantes :
la commutation d'un affichage de la page parent en plein écran à une superposition et à un affichage d'une partie médiane de la page enfant sur un premier côté de l'écran, dans lequel une hauteur de la partie médiane de la page enfant est la même qu'une hauteur de la page enfant, et une largeur de la partie médiane de la page enfant est inférieure à une largeur de la page enfant ; et
la commande de la page enfant pour qu'elle se déplace progressivement vers un second côté de l'écran et l'extension progressive de la partie affichée de la page enfant sur l'écran, jusqu'à ce que la page enfant soit affichée sur l'écran en plein écran, dans lequel le second côté est opposé au premier côté ;
dans lequel, en réponse à l'opération utilisée pour commuter de la page parent à la page enfant, le procédé comprend également :
la réalisation automatique, par le dispositif électronique, des étapes suivantes :
la génération d'un masque, dans lequel le masque comprend une couche de masque et la page enfant ; et
la commande de la couche de masque et de la page enfant pour qu'elles se déplacent vers le second côté de l'écran à des vitesses prédéfinies différentes et dans lequel la page parent reste immobile tandis que la page enfant et la couche de masque se déplacent, dans lequel une partie dans laquelle la page enfant et la couche de masque se chevauchent et qui est située dans l'écran est la partie affichée de la page enfant sur l'écran ;
l'affichage de la page enfant sur l'écran en plein écran après que la page enfant et la couche de masque ont cessé de se déplacer et que l'intégralité du contenu de la page enfant est recouverte par la couche de masque, et après que la page enfant est affichée en plein écran, le maintien du masque généré comprenant la couche de masque et la page enfant ;
dans lequel après l'affichage de la page enfant sur l'écran en plein écran, le procédé comprend également :
la détection, par le dispositif électronique, d'une opération utilisée pour commuter de la page parent à la page enfant, dans lequel l'opération est une opération de glissement de la main de l'utilisateur sur l'écran, et en réponse à l'opération utilisée pour commuter de la page parent à la page enfant, la réalisation automatique, par le dispositif électronique, des étapes suivantes :
la commutation d'un affichage de la page enfant en plein écran à un affichage de la page parent sur l'écran, et la superposition et l'affichage d'une partie de la page enfant sur un premier côté de l'écran, dans lequel une hauteur de la partie de la page enfant est la même que la hauteur de la page enfant, et une largeur de la partie de la page enfant est inférieure à la largeur de la page enfant ; et
la commande de la page enfant pour qu'elle se déplace progressivement vers le premier côté de l'écran et le rétrécissement progressif de la partie affichée de la page enfant sur l'écran, jusqu'à ce que la page parent soit affichée sur l'écran en plein écran, et dans lequel une vitesse à laquelle la page enfant commence à se déplacer vers le premier côté de l'écran est la même qu'une vitesse de l'opération de glissement de la main de l'utilisateur sur l'écran ;
dans lequel en réponse à l'opération utilisée pour commuter de la page enfant à la page parent, le procédé comprend également :
la réalisation automatique, par le dispositif électronique, des étapes suivantes :
la commande de la couche de masque et de la page enfant pour qu'elles se déplacent vers le premier côté de l'écran, dans lequel la partie dans laquelle la page enfant et la couche de masque se chevauchent et qui est située dans l'écran est une partie affichée de la page enfant sur l'écran.

2. Procédé selon la revendication 1, dans lequel le premier côté de l'affichage est un côté droit de l'affichage, et le second côté de l'affichage est un côté gauche de l'affichage.

3. Procédé selon la revendication 1 ou 2, dans lequel l'extension progressive de la partie affichée de la page enfant sur l'écran comprend spécifiquement :
l'extension progressive de la partie affichée de la page enfant sur l'écran vers le premier côté et le second côté.

4. Procédé selon l'une quelconque des revendications 1 à 3, dans lequel, après la détection, par le dispositif électronique, de l'opération utilisée pour commuter de la page parent à la page enfant, et avant l'affichage de la page enfant sur l'écran en plein écran, la page parent et la page enfant sont affichées sur l'écran sous des formes différentes, dans lequel la forme d'affichage comprend l'une ou plusieurs d'une couleur d'arrière-plan, d'une transparence, ou d'une bordure.

5. Procédé selon l'une quelconque des revendications 1 à 4, dans lequel
dans un processus de commande de la page enfant pour qu'elle se déplace progressivement vers le second côté de l'écran, une couleur d'arrière-plan de la page parent affichée sur l'écran devient progressivement plus sombre, ou une transparence de la page parent affichée sur l'écran devient progressivement plus élevée.

6. Procédé selon l'une quelconque des revendications 1 à 5, dans lequel
un processus dans lequel la couche de masque et la page enfant se déplacent vers le second côté de l'écran est un processus de mouvement de décélération.

7. Procédé selon l'une quelconque des revendications 1 à 6, dans lequel le rétrécissement progressif de la partie affichée de la page enfant sur l'écran comprend spécifiquement :
le rétrécissement progressif de la partie affichée de la page enfant sur l'écran vers le premier côté et/ou le second côté.

8. Procédé selon l'une quelconque des revendications 1 à 7, dans lequel, après la détection, par le dispositif électronique, de l'opération utilisée pour commuter de la page enfant à la page parent, et avant l'affichage de la page parent sur l'écran en plein écran, la page parent et la page enfant sont affichées sur l'écran sous des formes différentes, dans lequel la forme d'affichage comprend l'une ou plusieurs d'une couleur d'arrière-plan, d'une transparence, ou d'une bordure.

9. Procédé selon l'une quelconque des revendications 1 à 8, dans lequel
dans un processus dans lequel la page enfant se déplace progressivement vers le premier côté de l'écran, la couleur d'arrière-plan de la page parent affichée sur l'écran devient progressivement plus claire, ou la transparence de la page parent affichée sur l'écran devient progressivement plus faible.

10. Procédé selon l'une quelconque des revendications 1 à 9, dans lequel
un processus dans lequel la couche de masque et la page enfant se déplacent vers le premier côté de l'écran est un processus de mouvement de décélération.

11. Procédé selon l'une quelconque des revendications 1 à 10, dans lequel
la page parent est une interface utilisateur fournie par une application Contacts pour afficher une ou plusieurs informations de contact stockées dans le dispositif électronique, et la page enfant est une interface utilisateur fournie par l'application Contacts pour afficher des détails du carnet d'adresses d'un premier contact.

12. Dispositif électronique, comprenant un ou plusieurs processeurs, une mémoire, et un écran, dans lequel
la mémoire et l'écran sont couplés aux un ou plusieurs processeurs, la mémoire est configurée pour stocker un code de programme informatique, le code de programme informatique comprend des instructions informatiques, et les un ou plusieurs processeurs invoquent les instructions informatiques pour permettre au dispositif électronique de réaliser les étapes des revendications 1 à 11.
